# EUROPEAN PATENT APPLICATION

(11) **EP 4 730 748 A1**
(43) Date of publication of application: **22.04.2026**
(21) Application number: 24306738.6
(22) Date of filing: 18.10.2024
(51) Int. Cl.: H04L 65/80, H04L 65/612

(54) **METHOD FOR XR ROUNDTRIP DELAY ADJUSTMENTS IN A SPLIT RENDERING ARCHITECTURE**

(71) Applicant: InterDigital CE Patent Holdings, SAS, 75017 Paris (FR)
(72) Inventor: HIRTZLIN, Patrice, 35830 BETTON (FR); FONTAINE, Loic, 35530 NOYAL SUR VILAINE (FR); ONNO, Stephane, 35760 SAINT GREGOIRE (FR); GUDUMASU, Srinivas, MONTREAL, H3W 1K9 (CA); FAIVRE D'ARCIER, Etienne, 35750 SAINT GONLAY (FR); JOUET, Pierrick, 35000 RENNES (FR); LELIEVRE, Sylvain, 35760 MONTGERMONT (FR); PERIARD, Francois, MONTREAL, H3T IL7 (CA); HUDON, Mario, BROSSARD, J4Z 0T7 (CA)
(74) Representative: Vossius & Partner Patentanwälte Rechtsanwälte mbB

(57) **Abstract**

Some embodiments of a method may include: initializing a rendering session between a client and a server; obtaining scene adjustment information regarding an immersive scene; instructing the server to perform rendering of a first portion of the immersive scene using the scene adjustment information; rendering a second portion of the immersive scene using the scene adjustment information; obtaining one or more buffer frames from the server; processing the one or more buffer frames to generate rendering information; and instructing an XR runtime device to compose and render one or more frames using the rendering information.

## Description

### INCORPORATION BY REFERENCE

The present application incorporates by reference in their entirety the following applications: European Patent Application Serial No. EP24306441, entitled "MAP-BASED METHOD FOR XR ROUNDTRIP DELAY ADJUSTMENTS" and filed September 4, 2024 ("`441 application"); and European Patent Application Serial No. EP24305453, entitled "GRAPH BASED METHOD TO HANDLE RENDERING QUALITIES" and filed March 26, 2024 ("`453 application"): International Patent Application Serial No. PCT/EP2024/063331, entitled "MEASUREMENT AND ADJUSTMENT OF EXTENDED REALITY ROUNDTRIP DELAYS" and filed May 15, 2024 ("`331 application"); International Patent Application Serial No. PCT/EP2024/059406, entitled "METHODS FOR SERVER PROCESSING TASK DELAYS MEASUREMENTS AND ADJUSTMENTS" and filed April 5, 2024 ("'406 application").

### BACKGROUND

The present application is related to extended reality (XR) applications.

### SUMMARY

An example method in accordance with some embodiments may include: initializing a rendering session between a client and a server; obtaining scene adjustment information regarding an immersive scene; instructing the server to perform rendering of a first portion of the immersive scene using the scene adjustment information; rendering a second portion of the immersive scene using the scene adjustment information; obtaining one or more buffer frames from the server; processing the one or more buffer frames to generate rendering information; and instructing an XR runtime device to compose and render one or more frames using the rendering information.

For some embodiments of the example method, the scene adjustment comprises pose information for an object in an immersive scene.

For some embodiments of the example method, instructing the server to perform rendering of the first portion of the immersive scene using the scene adjustment information comprises instructing the server to perform rendering of the object using the pose information.

For some embodiments of the example method, the one or more buffer frames comprise the first portion of the immersive scene.

For some embodiments of the example method, the one or more buffer frames comprise the rendered object.

For some embodiments of the example method, the rendering information comprises one or more raw buffer frames.

Some embodiments of the example method may further include: obtaining one or more quality of experience (QoE) metrics; determining a QoE-based delay adjustment based on the one or more QoE metrics; instructing the server to perform the QoE-based delay adjustment; and continuing the rendering session using the QoE-based delay adjustment.

Some embodiments of the example method may further include: configuring a delay adjustment mechanism, wherein the delay adjustment mechanism comprises at least one of different QoE levels defined for each object, dependency information between QoE level of objects, and an adjustment strategy; measuring at least one delay; and determining a set of QoE levels based on a QoE map and the configured delay adjustment mechanism.

For some embodiments of the example method, measuring the at least one delay comprises: measuring at least one roundtrip delay, wherein measuring the at least one roundtrip delay comprises determining the at least one roundtrip delay based on several samples; and measuring at least one task processing delay.

Some embodiments of the example method may further include: receiving an adaptation trigger; determining an adaptation adjustment; requesting the server to perform the adaptation adjustment; and continuing the rendering session using the adaptation adjustment.

For some embodiments of the example method, the adaptation adjustment comprises at least one of a scene split, a scene update, a delay adjustment, and a QoE level adjustment.

For some embodiments of the example method, scene adjustment information comprises at least one of pose information of an object in the scene, one or more user actions, one or more state changes, and a QoE-based delay adjustment request.

For some embodiments of the example method, processing the one or more buffer frames comprises: decoding the one or more buffer frames; generating one or more raw buffer frames from the decoded one or more buffer frames; and preparing one or more composition layers and their corresponding swapchain images using the one or more raw buffer frames, wherein instructing the XR runtime device comprises sending the one or more composition layers and their corresponding swapchain images to the XR runtime device.

Some embodiments of the example method may further include determining to split rendering of the immersive scene into rendering of the first portion of the immersive scene and rendering of the second portion of the immersive scene.

An example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a message sequencing diagram illustrating an example user equipment-centric quality of experience management process according to some embodiments.
FIG. 3A is a flowchart illustrating an example XR roundtrip delay adjustment process according to some embodiments.
FIG. 3B is a graph illustrating an example measurement delay according to some embodiments.
FIG. 4 is a schematic illustration showing example object rendering qualities in an XR scene graph according to some embodiments.
FIG. 5 is a schematic illustration showing an example initial set of quality of experience levels according to some embodiments.
FIG. 6 is a flowchart illustrating an example process for adaptation based on a quality of experience map according to some embodiments.
FIG. 7 is a message sequencing diagram illustrating an example process for adaptation of split rendering according to some embodiments.
FIG. 8 is a message sequencing diagram illustrating an example quality of experience-based delay adjustment process according to some embodiments.
FIG. 9 is a schematic illustration showing an example XR scene graph providing flexibility for two quality of experience metrics according to some embodiments.
FIGs. 10A and 10B form a message sequencing diagram illustrating an example quality of experience-based delay adjustment profile process according to some embodiments.
FIGs. 11A and 11B form a message sequencing diagram illustrating an example process for adaptive split rendering profile with quality of experience-based delay adjustment according to some embodiments.
FIG. 12 is a message sequencing diagram illustrating an example process for adaptation of split rendering and/or quality of experience-based delay adjustment according to some embodiments.
FIG. 13 is a flowchart illustrating an example process for rendering an immersive scene according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

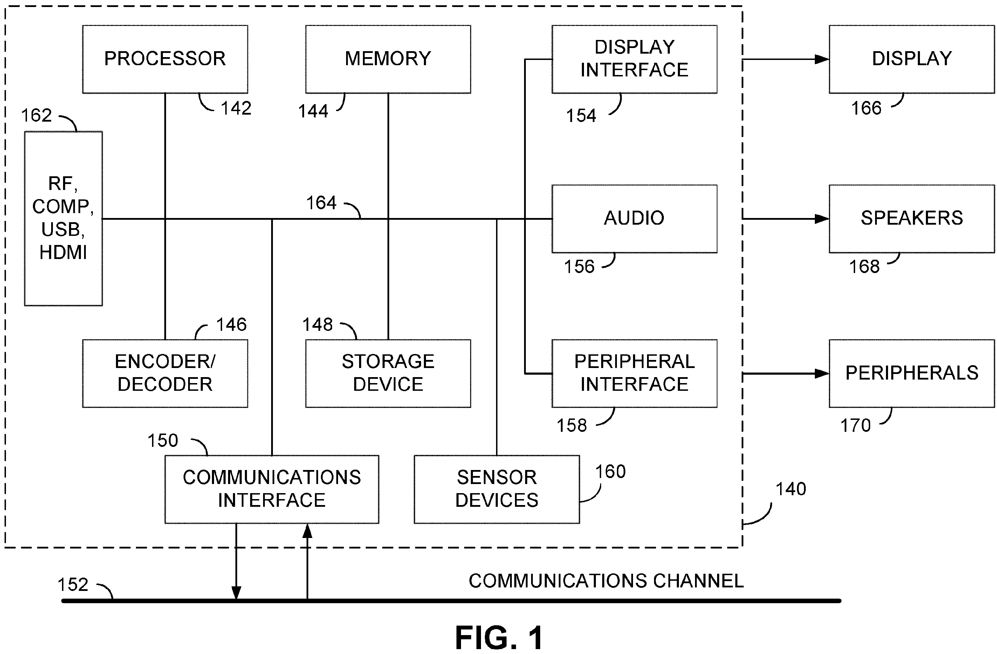

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a nearbaseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

The application provides a method to adjust roundtrip delays of an extended Reality (XR) application while maintaining an acceptable Quality of Experience (QoE) in a 3GPP split rendering architecture.

### QoE Level

A QoE level is a scene representation and/or parameterization impacting the processing task(s) (e.g., update, rendering) delay of a XR scene.

### Flexible Object

An object having several representations of geometry and/or texture. The selection of one of these representation impacts the delay of a processing task (e.g. the rendering of a XR scene). A QoE level may correspond to a representation of a *flexible* object within the XR scene.

### QoE-Based Delay Adjustment

A process adjusts a delay metric to maintain an acceptable QoE for the user. This adjustment may rely on QoE levels to modify the delay of an involved processing task. QoE-based delay adjustment mechanisms rely on metric measurements for adjustment.

A 3GPP split rendering architecture, which is an architecture where the scene rendering task is done in an Application Server (AS), may lead to a metric measurement that is not located in the same network entity as the adjustment. For example, a roundtrip delay metric (e.g., pose-to-render-to-photon or roundtrip interaction delay) may be measured in the User Equipment (UE) and the adjustment may be done in an AS. In that case, there is a need of a data exchange between the UE and the AS at the configuration stage and during the rendering loop to handle the adjustment.

The method defines a QoE-based delay adjustment mechanism distributed over a UE and an AS. These delay adjustments are based on QoE levels introduced in the XR scene and on metadata exchanged between the UE and the AS at the configuration step and during the rendering loop. These delay adjustments are related to several QoE metrics provided at the beginning of the XR session. The method provides to the application the possibility to select an active QoE metric (the QoE metric to be adjusted at this time) among the provided QoE metrics during the XR session.

Adaptation based on the scene rendering repartition between a UE and an AS has been studied in the technical specification, *Split Rendering Media Service Enabler (SR_MSE)*, 3GPP, Release 18, TS 26.565 ("*TS 26.565*") and is currently studied in the technical specification *Split Rendering over IMS (SR_IMS),* 3GPP, Release 19, TS 26.567 ("*TS 26.567*")*.*

### Methods for server processing task delays measurements and adjustments

The '406 application provides a method for a UE to manage delays by calculating the QoE delay metric from its measured processing task delays and the AS processing task delay measurements received from the AS. The '406 application adjusts its processing task delay and request processing task delay adjustments from the AS.

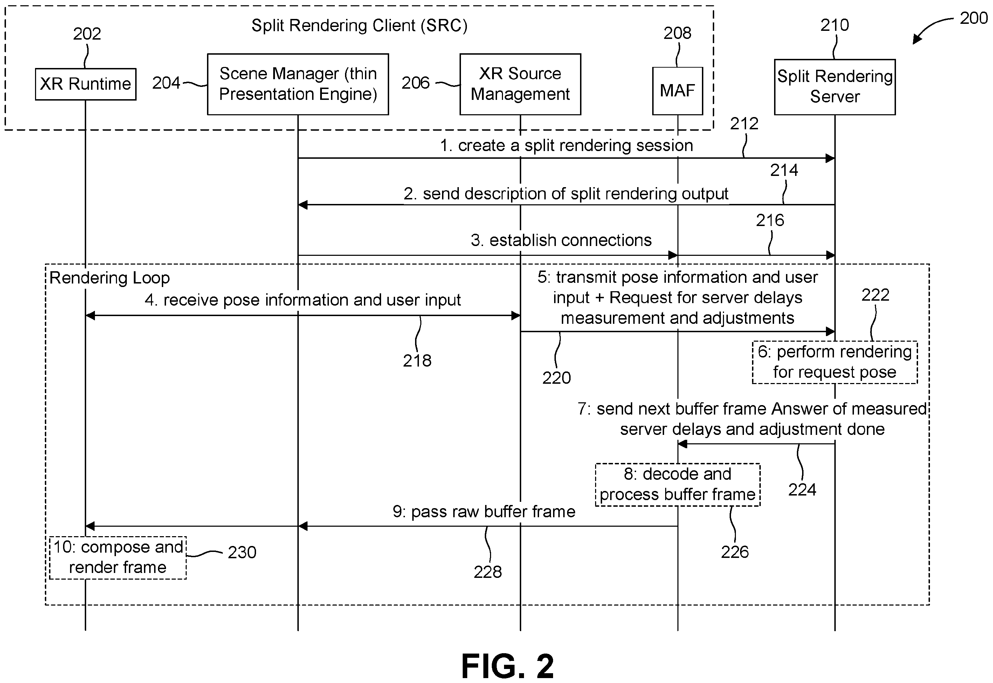

FIG. 2 is a message sequencing diagram illustrating an example user equipment-centric quality of experience management process according to some embodiments. The UE and the AS are named as Split Rendering Client (SRC) and Split Rendering Server (SRS) respectively for some embodiments. The AS may be an edge server for some embodiments.

For some embodiments, an example process 200, may include a scene manager 204 creating 212 a split rendering session with a split rendering server (SRS) 210. The SRS 212 may send 214 a description of a split rendering output to the scene manager 204. The scene manager 204 establish 216 a connection with a Media Access Function (MAF) 208. The MAF 208, in turn, may establish a connection with the SRS 210.

In a rendering loop, the XR source manager 206 retrieves 218 pose and user input from the XR runtime 202. The XR source management 206 transmits 220 pose information and user input to the SRS 210. The XR source management 206 may request from the SRS 210 server delays measurement(s) and may request adjustments. The SRS 210 may perform 222 rendering for the requested pose. The SRS 210 may send 224 to the MAF 208 the next buffer frame answer of measured server delays and adjustments done. The MAF 208 may decode and process 226 the buffer frame. The MAF 208 may pass 228 a raw buffer frame to the scene manager 204, and the scene manager 204 may pass the raw buffer frame to the XR runtime 202. The XR runtime 202 may compose and render the frame. The rendering loop may repeat steps 218, 220, 222, 224, 226, 228, 230.

The content of a transmit adjustment object may follow the format shown in Table 1. For some embodiments, a request object may a report Boolean and a delayAdjustment value.

**Table 1.**

| **Name** | | **Type** | **Cardinality** | **Description** |
|---|---|---|---|---|
| request | | object | 0..1 | An object that carries the adjustment request |
| | report | Boolean | 1..1 | If FALSE, the UE or the AS performs the adjustment of processing task delay. |
| | | | | If TRUE, the UE or the AS performs and reports the adjustment of processing task delay to the AS or the UE respectively. |
| | delayAdjustment | number | 0..1 | If positive, increment the additional delay budget that the task can spend. |
| | | | | If negative, decrement the delay budget that the task can spend. |
| answer | | object | 0..1 | An object that carries the adjustment answer |
| | AdjustedDelayDone | number | 1..1 | Reports the part of the applied delay adjustment, regarding the requested delay adjustment. |

### Method for measurement and adjustment of XR roundtrip delay

The `331 application provides a method for measurement and adjustment of XR roundtrip delay.

For each processing step of the rendering loop, the application switches to the proper QoE level based on the comparison between the measured processing delay measurement and the related pre-defined minimum and maximum processing delay thresholds to meet the end-to-end XR roundtrip delay.

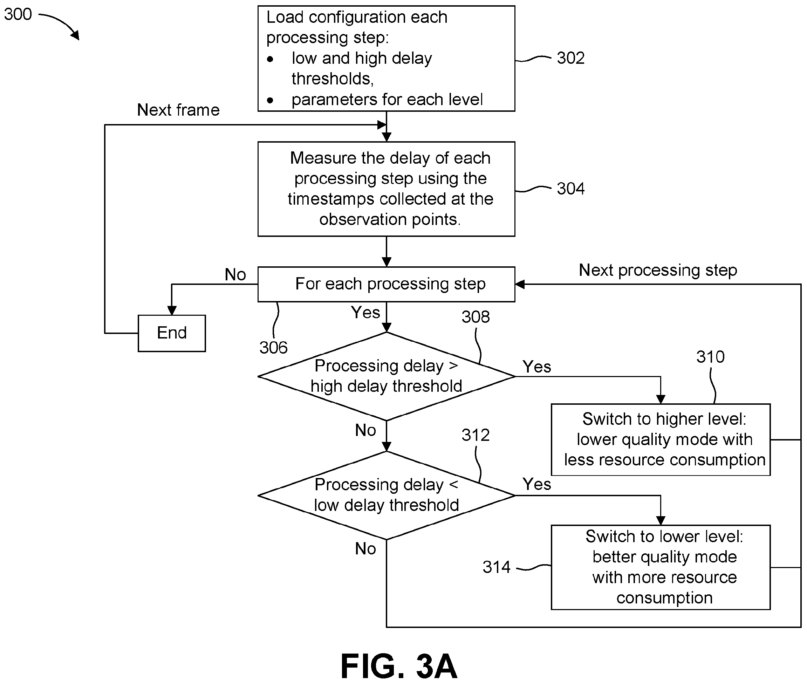

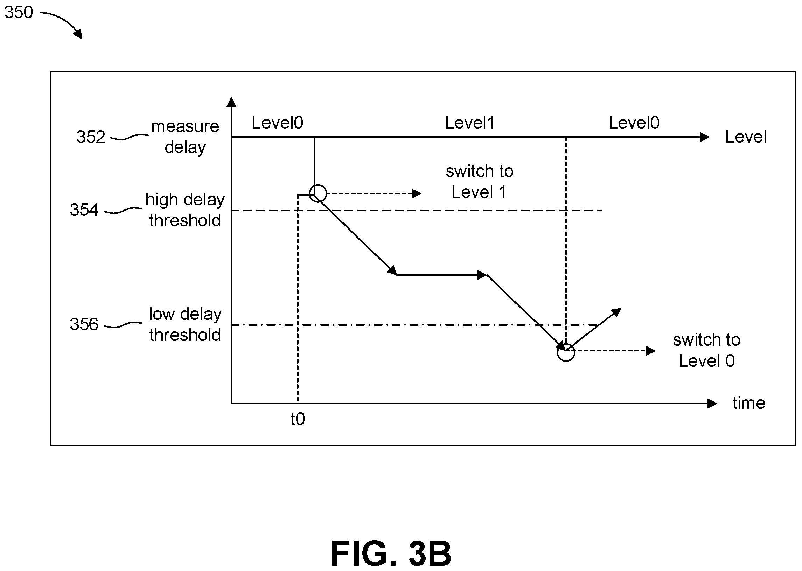

FIG. 3A is a flowchart illustrating an example XR roundtrip delay adjustment process according to some embodiments. The algorithm and an adaptation example are provided in FIG. 3. The example process 300 may be an adjustment of the XR roundtrip delay based on the `331 application.

In step 302, a configuration is loaded for each processing step. The configuration data may include low and high delay thresholds and parameters for each level. In step 304, the delay of each processing step is measured using the timestamps collected at the observation points. A loop 306 is performed for each processing step. A determination 308 is made of whether the processing delay is greater than a high delay threshold. If the processing delay is greater than the high delay threshold, then a switch 310 is made to a higher level with a lower quality mode and less resource consumption. If the processing delay is less than or equal to the high delay threshold, then a determination 312 is made of whether the processing delay is less than the low delay threshold. If the processing delay is less than the low delay threshold, then a switch 314 is made to a lower level with a better quality mode and more resource consumption. Processing returns to the top of the loop 306 to perform the next processing step. If the loop 306 is done, then the process 300 returns to step 304 to handle the next frame.

FIG. 3B is a graph illustrating an example measurement delay according to some embodiments. The graph 350 shows measured delay 352 vs. time with regard to the delay level. As time t0, the measured delay 352 is above the high delay threshold 354, so the level is switched to level 1. The measured delay 352 may eventually be below the low delay threshold 356. If the measured delay 352 is below the low delay threshold 356, the level is switched to level 0.

### Graph-Based Method to Handle Rendering Qualities

The `453 application provides a method to handle object rendering qualities in a scene graph representation based on pre-defined criteria. Among the criteria for some embodiments, a delay criteria may be used to select the object rendering qualities based on their provided delay thresholds.

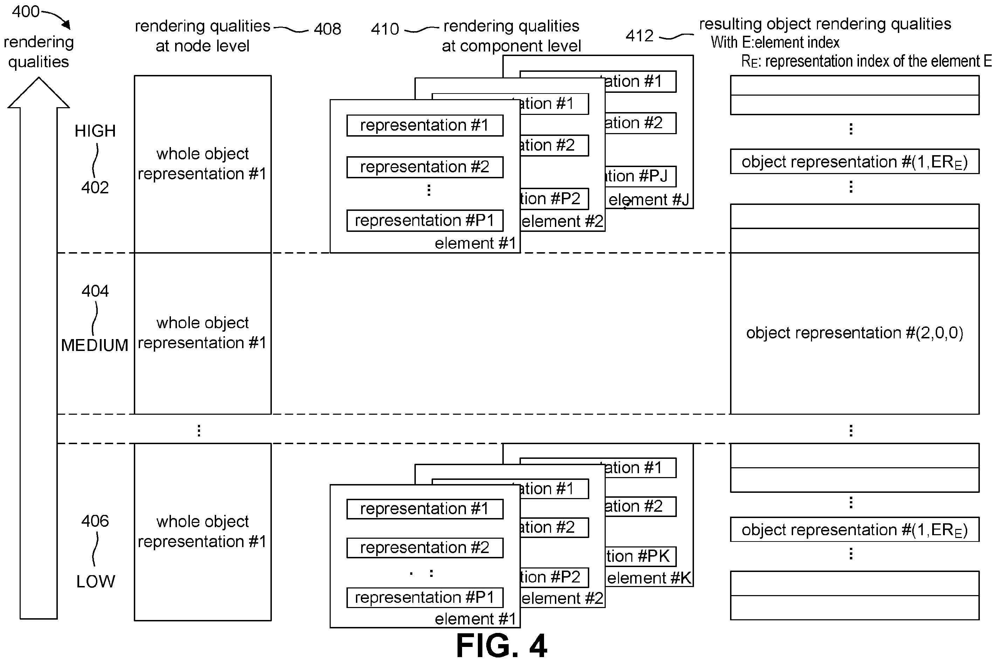

FIG. 4 is a schematic illustration showing example object rendering qualities in an XR scene graph according to some embodiments. Object rendering qualities and their corresponding thresholds are pre-defined in the graph representation 400 of the XR scene of FIG. 4 as defined in the `453 application.

The example graph representation 400 shows 3 rendering qualities: low 406, medium 404, and high 402. The example graph representation 400 further shows for the 3 rendering qualities example rendering qualities 408 at the node level, rendering qualities 410 at the component level, and resulting object rendering qualities 412 with an element index of E.

### Map-Based Method for XR Roundtrip Delay Adjustment

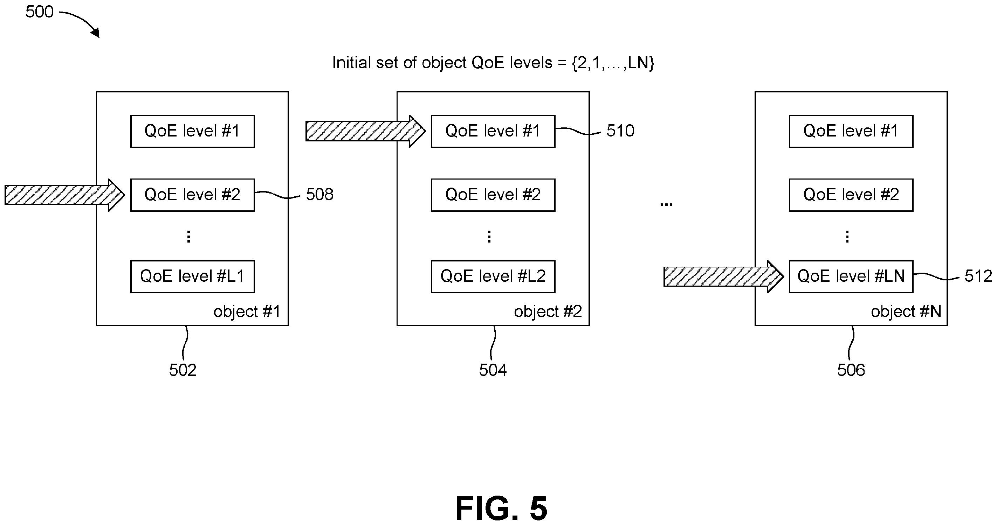

FIG. 5 is a schematic illustration showing an example initial set of quality of experience levels according to some embodiments. The `441 application provides a mechanism of roundtrip delay adjustment which is configured with one or more sets of QoE levels defined in the graph representation of the XR scene and with an adjustment strategy. The measured scene task processing delays with these QoE levels are stored in a QoE map allowing an optimized roundtrip delay adjustment at runtime (FIG. 5). FIG. 5 shows an initial set 500 of QoE levels 508, 510, 512 for a set of objects 502, 504, 506.

### Adaptive split rendering in 3GPP

Adaptation based on the scene rendering repartition between a UE and an AS has been studied in the technical specification *TS 26.565* and is currently studied in the technical specification *TS 26.567.*

### Adaptive Split Rendering in Split Rendering Media Service Enabler (SR_MSE)

An adaptive split rendering profile is provided in Annex C.2 of *TS 26.565.*

The adaptive split rendering profile allows a Split Rendering Client (SRC) to render some objects of a scene locally and the rendering split can be adapted between the Split Rendering Server (SRS) and SRC during a session. The adaptation of the rendering split may be triggered either by the SRS or the SRC to maintain a consistent QoE of the SR session or to accommodate changes in operating conditions. The triggers may be, for example, channel conditions, SRC or SRS conditions or defined by the application provider.

The related configuration (Table 2) and runtime (Table 3) metadata are provided in the section C.2.3 of the Annex of *TS 26.565*. Table 2 provides configuration specific data for an adaptive split rendering profile. Table 3 provides runtime specific data for the adaptive split rendering profile.

**Table 2.**

| **Name** | **Type** | **Cardinality** | **Description** |
|---|---|---|---|
| renderingSplit | object | 1..1 | An object identifying objects to be rendered and where they are to be rendered (SRS or SRC), for example, as a dictionary with keys "SRS" and "SRC" and lists of object indices from a scene description or a scene graph |
| synchronizedStatesInit | object | 1..1 | An object identifying states to be synchronized between the SRS and SRC and their initial state |
| states | object | 1..1 | A list of state identifiers, their current values |
| state | string/number | 1..n | Identifier of a state |
| initVal | string | 1..n | Initial value of the state |
| stateVals | array | 1..1 | An array of values possible for the state |

**Table 3.**

| **Name** | | **Type** | **Cardinality** | **Description** |
|---|---|---|---|---|
| id | | string | 1..1 | A unique identifier of the message in the scope of the data channel session. |
| type | | string | 1..1 | urn:3gpp:split-rendering:v1:asrp:sr-split |
| message | | object | 1..1 | Message content |
| | subtype | string | 1..1 | An identifier of the subtype of the message, it may be a request (REQ) for new split or acknowledgement (ACK), acceptance (OK) or rejection of a request (NOK). |
| | renderingSplitld | string | 1..1 | An identifier of the rendering split unique within the scope of the SR session |
| | renderingSplit | object | 0..1 | A object identifying objects to be rendered and where they are to be rendered (SRS or SRC). The message shall be a dictionary object . with keys "SRS" and "SRC", and values corresponding to a key shall be a list of named nodes from the scene description being rendered in the SR session. The keys shall indicate where the objects named in the corresponding value list are rendered. |

### Adaptive Split Rendering in Split Rendering IMS Communication (SR_IMS)

An SR-DCMTSI client (a Split-Rendering capable DCMTSI client) or a Media Function (MF) may trigger further procedures during a split rendering. See *TS 26.567* regarding SR_IMS.

One such procedure may be to adapt the split of rendering operations between the SR-DCMTSI client and the MF during a split rendering session. This split may be due to change in operating conditions of the split rendering session, for example operating conditions of the UE, the MF or changes in the application or scene being rendered, for example changes in the scene description. Split adaptation may include data exchange, for example, exchange of adaptation messages, application state information and assets needed for the split rendering of a Data Channel (DC) application.

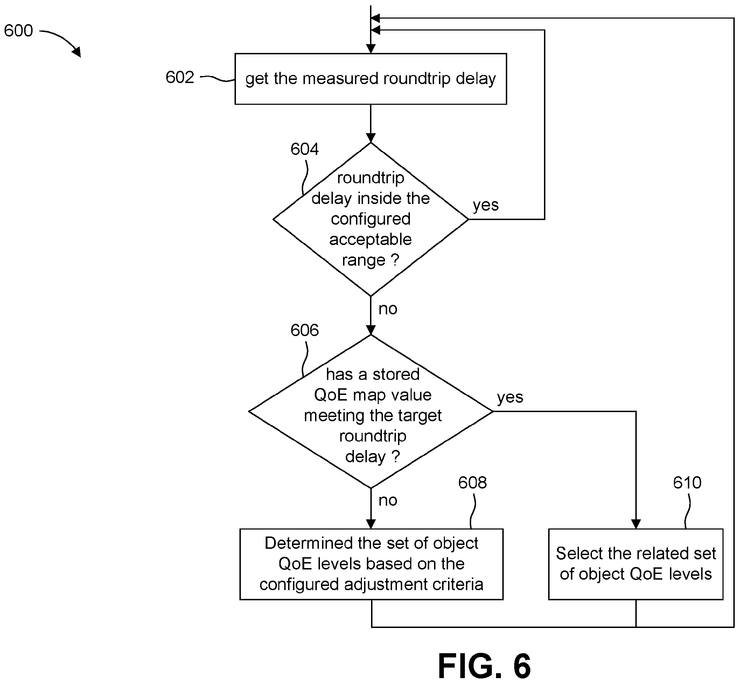

FIG. 6 is a flowchart illustrating an example process for adaptation based on a quality of experience map according to some embodiments. At box 602, the example process 600 gets 602 the measured roundtrip delay. A determination 604 is made to determine whether the roundtrip delay is inside the configured acceptable range. If the determination 604 is yes, the example process 600 returns to the top to get 602 the measured roundtrip delay. If the determination 604 is no, a determination 606 is made to see if a stored QoE map value is meeting the target roundtrip delay. If the determination 606 is yes, the process 600 selects 610 the related set of object QoE levels. If the determination 606 is no, the process 600 determines 608 the set of object QoE levels based on the configured adjustment criteria. The process 600 then returns to the top to get 602 the measured roundtrip delay.

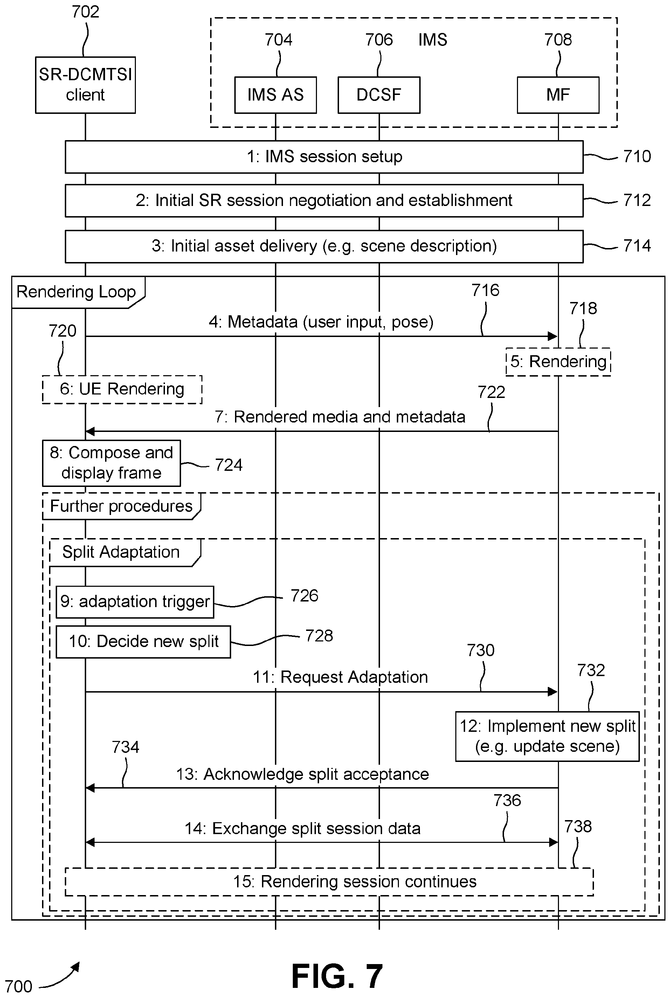

FIG. 7 is a message sequencing diagram illustrating an example process for adaptation of split rendering according to some embodiments. FIG. 7 provides a generic procedure 700 for the adaptation of the split rendering at runtime, while the exact details may depend on the DC-application being rendered. For some embodiments, the IMS AS 704 and/or the DCSF 706 are not impacted by messages between the SR-DCMTSI client 702 and the MF 708.

In step 1 (710), the IMS session is established between the SR-DCMTSI client 702 in a terminal and a terminating SR-DCMTSI Client which may be in a terminal.

In step 2 (712), a split rendering session is set up between the SR-DCMTSI client 702 and a serving MF 708.

In step 3 (714), assets related to the application being split rendered may be delivered to participants of the split rendering session. The asset delivery may include JavaScript assets, scene descriptions, and graphical objects needed for the session.

The rendering loop is executed continuously during the duration of the split rendering session, for each frame.

In step 4 (716), the SR-DCMTSI client 702 in a terminal sends metadata required for rendering to the MF 708. The metadata may include pose, pose predictions, user inputs etc.

In step 5 and 6 (718, 720), the SR-DCMTSI client 702 in a terminal and the MF 708 render the frame.

In step 7 (722), the frame rendered by the MF 708 is transmitted to the SR-DCMTSI client in terminal as well as possible metadata.

In step 8 (724), the SR-DCMTSI client 702 in a terminal composes a display frame from the received rendered media and media rendered locally.

In steps 5, 6, and 7 (718, 720, 722) although ordered above, may occur in any order. Step 8 (724) may include pose-correction. Step 6 and 8 (720, 724) may be executed as a single step.

Split Adaptation refers to adaptation of split rendering operations in an ongoing split rendering session between the SR-DCMTSI client and MF 708, without impacting the MF 708 resources provisioned by IMS AS

In step 9 (726), a trigger to adapt the split occurs at the SR-DCMTSI client 702 in a terminal; the trigger may be, for example, a change in available UE resources (e.g. battery, compute), changes in QoE of the SR session, changes in the scene/application being rendered.

In step 10 (728), the SR-DCMTSI client 702 in a terminal decides if a new split of the rendering operations is needed and determines the new split.

In step 11 (730), the SR-DCMTSI client 702 in a terminal sends a request to the MF 708 to adapt the split to the new split.

In step 12 (732), the MF 708 actuates the new split of the rendering operations.

In step 13 (734), the MF 708 sends an acknowledgment of the new split to the SR-DCMTSI client in terminal.

In step 14 (736), the MF and UE may exchange messages and data to support the new split of operations. This may include exchange of messages, for example, for synchronization of the state of the scene being split rendered or exchange of assets, for example, those in Step 3.

In step 15 (738), the rendering loop (steps 4 through 12) continues.

Split adaptation is shown to be initiated by the SR-DCMTSI client in terminal for clarity, the procedure may be triggered by the MF 708. Further, other procedures to actuate the new split may be executed during the split rendering session.

### Problem Statement

The methods for server processing task delays measurements and adjustments provide a mechanism to measure and calculate an adjustment delay either at the UE or at the AS. A request of delay adjustment may then be sent to the AS to modify its task delays.

It is unclear how the mechanism is configured, especially how the knowledge of the delay adjustment range per task is known by the UE and/or the AS.

The method for measurement and adjustment of XR roundtrip delay and the map-based method for XR roundtrip delay adjustment provide QoE levels per scene or per object to be used for the adjustment of roundtrip delays.

The main limitation comes from the assumption that the whole algorithm (the delay measurement and the adjustment) is running in a single device (e.g., UE or AS) within the Scene Manager function. Therefore, they cannot be used for a split rendering architecture where the metric measurement is not located in the same network entity as the adjustment. In a split rendering architecture, the metric measurement may be performed in another network entity as the adjustment. For example, a roundtrip delay metric (e.g., pose-to-render-to-photon or roundtrip interaction delay) may be measured in the UE as the adjustment may be done in an AS. In that case, there is a need of data exchange between the UE and the AS at the configuration stage and during the rendering loop to handle the adjustment.

The adjustment method based on the adaptation of the rendering split between a UE and an AS may be used to adapt roundtrip delays (especially the roundtrip interaction delay) in a split rendering architecture. By rendering locally in the UE the objects, the user is able to interact with, a low roundtrip interaction delay may be maintained for that user in some specific cases where the user interaction does not impact significatively the rendering of the other objects done by the AS.

This assumption of independent rendering is one limitation of this method, even if an object state synchronization between the UE and the AS is provided to address this issue. In the case of dependent UE and AS renderings, the synchronization delay between the UE and the AS needs to be considered in the roundtrip interaction delay leading to a limited range of delay adjustment.

Another limitation of this method in the scope of roundtrip delay adjustment is the UE processing capabilities. As the level of rendering split between the UE and the AS may also be dictated by the UE processing capabilities, the range of the delay adjustment may be limited, especially for low-end devices (having limited resources such as computing, battery power, memory size). For example, if the roundtrip interaction delay needs to be reduced, the adjustment method will lead to assign the rendering of the object(s) affected by this interaction to the UE. If these objects have highly detailed geometries and/or high-resolution textures, the UE may not be capable to render them.

To overcome these limitations, it would be more efficient to offer a range of delay adjustment in the XR scene, e.g., by providing QoE levels for *flexible* objects (a QoE level contains an object representation impacting the processing task delay) as described below.

As understood, this application provides a novel method distributed over a UE and an AS for roundtrip delay adjustment which overcomes the above limitations.

The application provides a method to adjust roundtrip delays of an extended Reality (XR) application while maintaining an acceptable Quality of Experience (QoE) in a 3GPP split rendering architecture.

QoE-based delay adjustment mechanisms rely on metric measurements for proper adjustment.

A 3GPP split rendering architecture, which is an architecture where the scene rendering task is done in an Application Server (AS), may lead that the metric measurement is not located in the same network entity as the adjustment. For example, a roundtrip delay metric (e.g., pose-to-render-to-photon or roundtrip interaction delay) may be measured in the User Equipment (UE) as the adjustment may be done in an AS. In that case, there is a need of data exchange between the UE and the AS at the configuration stage and during the rendering loop to handle the adjustment.

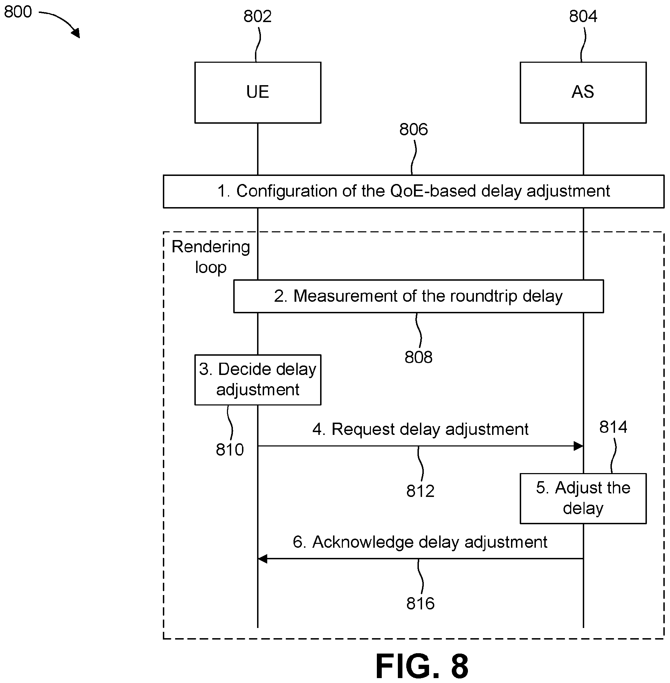

FIG. 8 is a message sequencing diagram illustrating an example quality of experience-based delay adjustment process according to some embodiments. In an example process 800, configuration 806 of the QoE-based delay adjustment occurs between a user equipment (UE) device 802 and an application server (AS) 804. For some embodiments, configuration data may be provided through glTF extension(s), e.g., at the glTF node and/or at the glTF material, mesh levels. A measurement 808 of the roundtrip delay is made between the UE 802 and the AS 804. The UE 802 decides 810 a delay adjustment. The UE 804 sends 812 a delay adjustment request to the AS 804. The AS 804 adjusts 814 the delay. The AS 804 sends 816 an acknowledgment of the delay adjustment to the UE 804.

The method of delay adjustment depends on the level of exposure of the XR scene flexibility by the application. For example, the following cases may be envisaged:
The application exposes no data on the XR scene flexibility
Only a capability information (e.g. a hasProcessingDelayFlexibility Boolean) on the XR scene processing delay flexibility may be exchanged between the UE and the AS during the configuration stage
If the application has a XR scene processing delay flexibility, the UE may send to the AS a delay adjustment request (e.g., a delay increase/decrease request as defined in Table 1 related to the '406 application) based on the roundtrip delay measurement within the rendering loop
The AS sends to the UE an acknowledge message
The application exposes a limited amount of data on the range and/or the granularity of the XR scene processing delay flexibility. For example, an XR scene may contain several QoE levels leading to several scene processing delays which provide delay flexibility
The number of QoE levels and an information on the initial QoE level may be exchanged between the UE and the AS during the configuration stage
For example, five QoE levels may be available, and the initial QoE level is the 3^{rd} ones, having the index 2 in the array of QoE levels which may be ordered by increasing delays
The UE may send to the AS a QoE level adjustment request (e.g., a QoE level increase/decrease request) based on the roundtrip delay measurement within the rendering loop
The AS may send to the UE an acknowledge message indicating the index of the current QoE level within the QoE levels array
The application exposes all the available data on the XR scene processing delay flexibility enabling the UE and the AS to provide fine grain delay adjustments
This case is detailed in this application by considering that each object of the XR scene may have several representations (QoE levels)

The method defines a QoE-based delay adjustment mechanism distributed over a UE and an AS. These delay adjustments are based on QoE levels introduced in the XR scene and on metadata exchanged between the UE and the AS at the configuration step and during the rendering loop. These delay adjustments are related to several QoE metrics provided at the beginning of the XR session. The method provides to the application the possibility to select an active QoE metric (the QoE metric to be adjusted at this time) among the provided QoE metrics during the XR session.

### Configuration of the QoE-based delay adjustment

The configuration data of the QoE-based delay adjustment need to provide the following information:
The identification of which parts/entities (e.g., nodes of the graph representing objects, animation) of the XR scene are *flexible,* which parts/entities provide several representations with corresponding QoE levels to be used for the delay adjustment,
The identification of the relevant QoE metrics, as an XR experience may consider several QoE metrics, and the need of adjusting one of them may evolve depending on the user navigation/interaction with the XR scene at this time
Only one QoE metric (i.e. active QoE metric) is selected and considered by the delay adjustment at any time
The handling of the delay metric adjustment

The configuration data of the XR scene flexibility may be provided to the UE and/or the AS within a XR scene description file (e.g., MPEG-I Scene Description) containing the graph representation of the XR scene, within a dedicated configuration file or message, or through functions of an API.

The configuration data are typically provided at the beginning of the XR session, and when an update of the XR scene description file is received, to consider changes in the content (e.g., addition/removal of objects).

The `441 application provides configuration data to identify which parts/entities of the XR scene are *flexible,* and the related QoE levels based on the object rendering qualities of the `453 application.

These configuration data may be provided into a dedicated 3gpp_scene_qoe glTF extension of a scene description file.

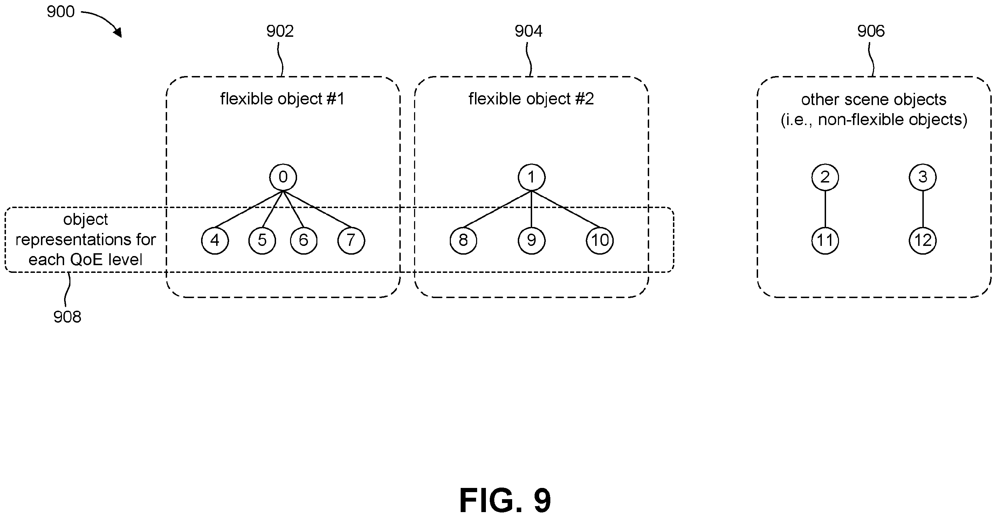

Code Listing 1 shows an example of a 3gpp_scene_qoe glTF extension, providing the configuration data of the '441 application for a gITF scene representing the flexible XR scene of FIG. 9. An example of dedicated 3gpp_scene_qoe glTF extension is depicted in Code Listing 1 corresponding to the XR scene graph represented in FIG. 9, where XR scene flexibilities are provided for two QoE metrics (pose-to-render-to-photon and roundtrip interaction delay), with the following parameters of the `441 application:
The *flexibleObjects* array contains the *flexible* objects. Each *flexible* object provides several representations contained in the *qoeLevels* array:
The *qoeLevels* array contains the indices of the nodes of the glTF nodes array corresponding to the object representation related to each QoE level.

For each QoE metric:
The *name* of the QoE metric which should be consistent with the name provided in the quality metrics report, such as the report specified in *TS 26.565,* clause 9.3.5.
The *preferredQoeLevelCombinations* array corresponds to preferred combinations of QoE level(s) between *flexible* objects. The application may use this information to ease the process of QoElevel selection by directly selecting a set of QoE levels for the XR scene without trying to identify the best QoE level for each *flexible* object. Each element of this array may contain an array of indices pairs where:
   the 1^{st} index of the pair corresponds to the index of the flexible object in the *flexibleObjects* array,
   the 2^{nd} index of the pair corresponds to the index of the QoE level of that flexible object in the *qoeLevels* array.
   The *forbiddenQoeLevelCombinations* array corresponds to forbidden combinations of QoE level(s) between *flexible* objects. Each element of this array may contain an array of indices pairs where:
   the 1^{st} index of the pair corresponds to the index of the flexible object in the *flexibleObjects* array,
   the 2^{nd} index of the pair corresponds to the index of the QoE level of that flexible object in the *qoeLevels* array.
The *adjustmentCriteria* parameter to guide the application of determining the next QoE levels, when more than one *flexible* objects are defined in the XR scene, in the case where the application does not rely on the *preferredQoeLevelCombinations* parameter. This parameter is typically used by the AS as the criteria may require some pieces of information from the rendering task.
For example, based on the viewing distance criteria ("VIEWING_DISTANCE"), by increasing the QoE level (by increasing the processing delay) for close object(s) if the measured delay is below the delay metric and by decreasing the QoE level (by decreasing the processing delay) for far object(s) if the measured delay is above the delay metric.

For example, based on the Field-of-View (FoV) criteria ("FIELD_OF_VIEW"), by increasing the QoE level (by increasing the processing delay) for object(s) in the center of the FoV if the measured delay is below the delay metric and by decreasing the QoE level (by decreasing the processing delay) for object(s) located at the borders of the FoV if the measured delay is above the delay metric.

For example, based on the screen coverage criteria ("SCREEN_COVERAGE"), by increasing the QoE level (by increasing the processing delay) for object(s) having larger screen coverage if the measured delay is below the delay metric and by decreasing the QoE level (by decreasing the processing delay) for object(s) having smaller screen coverage if the measured delay is above the delay metric.

| |
|---|
| ```
 "scenes": [
 {
      "name" : "flexible scene",
      "nodes" : [
                        0,
                        1,
                        2,
                        3
                  ],
      "extensions": {
            "3gpp_scene_qoe": {
                  "flexibleObjects": [
                        {
                              "qoeLevels": [
                                    4,
                                    5,
                                    6,
                                    7
                              ]
                        },
                        {
                              "qoeLevels": [
                                    8,
                                    9,
                                    10
``` |
| ```
                              ]
                        }
                  ]
                  "qoeMetrics": [
                        {
                              "name":"pose-to-render-to-photon",
                              "preferredQoeLevelCombinations": [
                                    {
                                          0, 1, 1, 0
                                    },
                                    {
                                          0, 2, 1, 1
                                    },
                                    {
                                          0, 3, 1, 2
                                    },
                              ]
                              "forbiddenQoeLevelCombinations": [
                                    {
                                          0, 0, 1, 0
                                    },
                                    {
                                          0, 1, 1, 2
                                    },
                              ]
                              "adjustmentCriteria":"SCREEN_COVERAGE",
                        },
                        {
                              "name":"roundtrip interaction delay",
                              "preferredQoeLevelCombinations": [
                                    {
                                          0, 0, 1, 0
                                    },
``` |
| ```
                                    {
                                          0,2,1,2
                                    },
                              ]
                              "forbiddenQoeLevelCombinations": [
                                    {
                                          0, 1, 1, 0
                                    },
                                    {
                                          0,2,1,3
                                    },
                              ]
                              "adjustmentCriteria":"VIEWING_DISTANCE",
                        }
                  ]
            }
      }
 }
 ]
``` |

### Code Listing 1.

FIG. 9 is a schematic illustration showing an example XR scene graph providing flexibility for two quality of experience metrics according to some embodiments. FIG. 9 shows an example XR scene graph 900, which provides flexibility for two QoE metrics. FIG. 9 shows two flexible objects 902, 904 and a series of other scene objects 906, which may be non-flexible objects. For the two flexible objects 902, 904, there are multiple object representations 908 for each QoE level.

In some embodiments, QoE levels are provided for the entire XR scene instead of providing QoE levels for each *flexible* object. Some embodiments may reduce the rendering quality because the adjustmentCriteria is no longer considered. Such a change may ease the adjustment process by providing direct access to a single array of QoE levels that may be ordered, for example, by increasing delay (the QoE level at i^{th} element of the array requires more processing delay than the QoE level at the (i-1)^{th} element of the array).

Code Listing 2 provides an example of the 3gpp_scene_qoe glTF extension providing the 4x3 = 12 QoE levels for the whole XR scene of FIG. 9 and for a single pose-to-render-to-photon metric.

The qoeLevels array may contain 4 indices. The 1^{st} index corresponds to the index of the parent node grouping the representations of a first object in the glTF nodes array. The 2^{nd} index corresponds to the index of the child node corresponding to a representation of the first object in the glTF nodes array. The 3^{rd} index corresponds to the index of the parent node grouping the representations of a second object in the glTF nodes array. The 4^{th} index corresponds to the index of the child node corresponding to a representation of the second object in the glTF nodes array.

| |
|---|
| ```
 "scenes": [
 {
      "name" : "flexible scene",
      "nodes" : [
                        0,
                        1,
                        2,
                        3
                  ] ,
      "extensions": {
            "3gpp_scene_qoe": {
                  "qoeMetrics": [
                        {
                              "name":"pose-to-render-to-photon",
                              "qoeLevels": [
                                    {
                                         0, 4, 1, 8
                                    },
                                    {
                                         0,5,1,8
                                    },
                                    {
                                         0, 6, 1, 8
                                    },
                                    {
                                         0,7,1,8
                                    },
                                    {
``` |
| ```
                                         0, 4, 1, 9
                                    },
                                    {
                                         0, 5, 1, 9
                                    },
                                    {
                                         0, 6,1, 9
                                    },
                                    {
                                         0,7,1,9
                                    },
                                    {
                                         0, 4, 1, 10
                                    },
                                    {
                                         0,5,1,10
                                    },
                                    {
                                         0, 6, 1, 10
                                    },
                                    {
                                         0,7,1,10
                                    },
                              ]
                        }
                  ]
            }
      }
 }
 ]
``` |

### Code Listing 2.

Additional configuration data (Table 4) are also exchanged between the UE and the AS with a configuration message transmitted for example by using the SWAP protocol as defined in Real-Time Media Communication: Protocols and APIs, 3GPP, TS 26.113, clause 13.2. The exchange of these data between the UE and the AS at the configuration step are required to enable the transmission of adjustment request and acknowledge data during the rendering loop.

**Table 4.**

| **Name** | **Type** | **Cardinality** | **Description** |
|---|---|---|---|
| ActiveQoeMetricId | string | 1..1 | A unique identifier of the QoE metric currently considered by the delay adjustment. |
| QoeLevelHandlingEntity | string | 1..1 | A parameter identifying which network entity (either the "UE" or the "AS") is handling the selection of the appropriate set of QoE levels based on the delay adjustment requirement for this active QoE metric. A QoE map as defined in the `441 application may be used by the UE or the AS to select the appropriate set of QoE levels. The QoE map provides already measured processing task delay of the XR scene (e.g., rendering delay) for each set of QoE levels. |
| AdjustmentRequestType | string | 1..1 | The type of the adjustment request parameters of Table 5. It could either be: |
| | | | - "DELAY_ADJUSTMENT_REQUEST": the content of the DelayAdjustmentRequest parameter is a signed delay adjustment value, |
| | | | - "QoE_LEVEL_INCREASE_DECREASE": the content of the QoeLevelsAdjustmentRequest parameter could either be: |
| | | | - "QoE_LEVEL_INCREASE": the QoE level of a flexible object shall be increased, |
| | | | - "QoE_LEVEL_DECREASE": the QoE level of a flexible object shall be decreased, |
| | | | - "OBJECT_QoE_LEVEL_VALUE": the content of the QoeLevelRequest parameter is a QoE level identifier for each flexible object |
| FlexibleObjects | array | 1..1 | An array of the flexible objects for which QoE levels are available for the adjustment of that QoE metric. |
| | | | This FlexibleObjects array may contain all or a subset of the flexible objects defined in the flexibleObjects array of the 3gpp_scene_qoe gITF extension. |
| FlexibleObjectId | string | 1..1 | A unique identifier of the flexible object within the scope of the split rendering session. The index of that object in the flexibleObjects array of the 3gpp_scene_qoe gITF extension may be used. |
| InitQoeLevel | string | 1..1 | The unique identifier of the QoE level of the flexible object identified by the FlexibleObjectId to be used at initialization. |
| QoeLevelIds | array | 1..1 | An array of the QoE levels for the flexible object identified by the FlexibleObjectId. |
| | | | This QoeLevellds array may contain all or a subset of the QoE levels defined in the qoeLevels array of the 3gpp_scene_qoe gITF extension. |
| QoeLevelId | string | 1..1 | A unique identifier of the QoE level of the flexible object identified by the FlexibleObjectld. The index of that QoE level in the QoeLevels array of that flexible object of the 3gpp_scene_qoe gITF extension may be used. |
| QoeMetrics | array | 1..1 | An array of the QoE metrics for which scene adjustment are available. |
| | | | This QoeMetrics array may contain all or a subset of the QoE metrics defined in the qoeMetrics array of the 3gpp_scene_qoe gITF extension. |
| QoeMetricId | string | 1..1 | A unique identifier of the QoE metric within the scope of the split rendering session. The index or the name of that metric in the qoeMetrics array of the 3gpp_scene_qoe gITF extension may be used. If the name of that QoE metric is chosen as unique ID, this name should be consistent with the name provided in the quality metrics report of SR_MSE (TS 26.565, clause 9.3.5). |
| TargetDelay | number | 1..1 | The target delay for the QoE metric in millisecond. |
| MinimumDelay | number | 1..1 | The minimum delay for the QoE metric in millisecond. Measured delay between the minimumDelay and maximumDelay values does not require a delay adjustment. |
| MaximumDelay | number | 1..1 | The maximum delay for the QoE metric in millisecond. Measured delay between the minimumDelay and maximumDelay values does not require a delay adjustment. |
| MesurementPeriodicity | string | 1..1 | The periodicity of the delay measurement for that QoE metric. It may be expressed as a multiple of the rendering frame, e.g., "EVERY_5_FRAMES". |
| AdjustmentPeriodicity | string | 1..1 | The periodicity of the delay adjustment for that QoE metric. It may be expressed as a multiple of the measured delay samples, e.g., "EVERY_3_MEASUREMENT_SAMPLES". |

Code Listing 2 and Table 4 provide an example of how the configuration parameters may be exchanged between the UE and the AS using a scene description file and a configuration message. The partition of the configuration data between the scene description file and the configuration message may be different (some configuration data of the scene description file may be provided in the configuration message, or some configuration data of the configuration message may be provided in the scene description file).

The flexible objects, the QoE levels and the QoE metrics provided in the configuration message of Table 4 may be a subset of those provided in the scene description file (Code Listing 2). This subset is resulting from a UE/AS negotiation based, for example, on the UE and/or AS processing capabilities (e.g., rendering capabilities).

### Measurement of the Roundtrip Delay for the Active QoE Metric

For the active QoE metric, based on the measurementPeriodicity parameter provided to the UE during the configuration step, the UE collects the measurement of the roundtrip delay and the elementary task (e.g., update, rendering of the scene) processing delays based on processes mentioned in the '406 application and the `331 application.

If the UE is handling the selection of the appropriate QoE levels (the QoeLevelHandlingEntity parameter is set to "UE") for that QoE metric, the UE may use a QoE map (according to the `441 application)**Error! Reference source not found,** to store or update the measured elementary task (e.g., update, rendering of the scene) processing delays for the current QoE levels of the XR scene.

If the AS is handling the selection of the appropriate QoE levels (the QoeLevelHandlingEntity parameter is set to "AS") for that QoE metric, the AS may use a QoE map (according to the `441 application) to store or update the measured elementary task (e.g., update, rendering of the scene) processing delays for the current QoE levels of the XR scene.

### Decision on the Delay Adjustment for the Active QoE Metric

For the active QoE metric, based on the adjustmentPeriodicity parameter provided to the UE during the configuration step, the UE checks if the measured delay is inside an acceptable delay range.

This acceptable delay range may be defined from the minimumDelay and maximumDelay parameters provided to the UE during the configuration step.

As mentioned in the `441 application, an average/filtered delay value between several measurement samples may be calculated and stored to avoid instability. For example, an Exponential Moving Average (EMA) could be used for smoothing the time series measurements, also allowing adjustment on reactiveness.

If the measured delay is outside the acceptable delay range, the UE decides a delay adjustment for the active QoE metric and sends a delay adjustment request to the AS.

### Sending the Adjustment Request

If the UE has decided a delay adjustment for the active QoE metric, the UE sends an adjustment request message to the AS with the data provided in Table 5.

The adjustment request message may be transmitted by using a WebRTC data channel. In one embodiment, this adjustment request message may use the same WebRTC data channel as the pose and action message required for the split rendering operation *TS 26.565.*

**Table 5.**

| **Name** | **Type** | **Cardinality** | **Description** |
|---|---|---|---|
| AdjustmentRequestId | string | 1..1 | A unique identifier of the adjustment request within the scope of the split rendering session. To be used in the adjustment acknowledgment |
| ActiveQoeMetricId | string | 0..1 | The unique identifier of the QoE metric to be adjusted. |
| | | | This parameter may be transmitted only if the activeQoeMetric has changed since the last adjustment request. |
| | | | This identifier was exchanged between the UE and the AS during the configuration step. |
| DelayAdjustmentRequest | number | 0..1 | Signed delay adjustment value derived from the equation (1): |
| | | | adjustmentDelay = targetDelay - measuredDelay (1) |
| | | | The measuredDelay corresponds to the measured delay of section 3.3. This parameter is provided when the selection of the QoE levels is not handled by the UE (the QoeLevelHandlingEntity configuration parameter is set to "AS"), and when the AdjustmentRequestType configuration parameter of Table 4 is set to "DELAY_ADJUSTMENT_REQUEST". |
| QoeLevelsAdjustmentRequest | string | 0..1 | The value could either be: |
| | | | - "QoE_LEVEL_INCREASE": the QoE level of a flexible object shall be increased, |
| | | | - "QoE_LEVEL_DECREASE": the QoE level of a flexible object shall be decreased |
| | | | This parameter is provided when the selection of the QoE levels is handled by the UE (the QoeLevelHandlingEntity configuration parameter is set to "UE"), and when the AdjustmentRequestType configuration parameter of Table 4 is set to "QoE_LEVEL_INCREASE_DECREASE". |
| ObjectAdjustmentRequest | array | 0..1 | An array of the flexible objects for which QoE levels need to be set for that QoE metric. |
| | | | This parameter is provided when the selection of the QoE levels is handled by the UE (the QoeLevelHandlingEntity configuration parameter is set to "UE"), and when the AdjustmentRequestType configuration parameter of Table 4 is set to "OBJECT_QoE_LEVEL_VALUE". |
| FlexibleObjectId | string | 1..1 | The unique identifier of the flexible object exchanged between the UE and the AS during the configuration step. |
| QoeLevelRequest | string | 1..1 | The unique identifier of the QoE level to be set for that flexible object. This identifier was exchanged between the UE and the AS during the configuration step. |

As shown in Table 5, there are three types of data for the adjustment request based on the capability of the UE to handle or not the selection of the appropriate set of QoE levels based on the delay adjustment requirement, and based on the AdjustmentRequestType configuration parameter of Table 4:
If the UE is not handling the selection of the QoE levels, the UE sends directly the appropriate delay adjustment value for the QoE metric delay adjustment to the AS
If the UE is handling the selection of the QoE levels, the UE needs to determine the appropriate QoE levels of the flexible objects.
If the AdjustmentRequestType configuration parameter is set to "QoE_LEVEL_INCREASE_DECREASE", The UE sends either the "QoE_LEVEL_INCREASE" or "QoE_LEVEL_DECREASE" parameter to the AS to increase or decrease the QoE level of a *flexible* object. It is under the responsibility of the AS to select the appropriate *flexible* object.
If the AdjustmentRequestType configuration parameter is set to "OBJECT_QoE_LEVEL_VALUE ", the UE sends the QoE levels to be set for each *flexible* object. The UE may rely on the QoE level determination step of the `441 application, by using a QoE map providing already measured processing task delay of the XR scene (e.g., rendering delay) for each set of QoE levels. As an alternative, the UE may directly select the appropriate QoE level for the whole scene ordered in the QoeLevels array (by decrementing/incrementing the QoE level if the delay needs to be reduced or increased respectively)

### Adjustment of the delay for the active QoE metric

The AS adjusts the delay of the active QoE metric based on the three cases of the adjustment requests from the UE (the AdjustmentRequestType is either "DELAY_ADJUSTMENT_REQUEST", "QoE_LEVEL_INCREASE_DECREASE", or "OBJECT_QoE_LEVEL_VALUE ").

The AS needs first to determine the appropriate QoE levels of the flexible objects. Then the AS sets the newly defined QoE levels for the active QoE metric before processing its tasks (e.g., scene update, scene rendering).

### Adjustment based on the "DELAY_ADJUSTMENT_REQUEST"

In this case, the AS is handling the selection of the QoE levels.

The AS needs to determine the appropriate QoE levels of the flexible objects from the delay adjustment request value provided by the UE.

The AS may rely on the QoE level determination step of the `441 application, especially by using:
the adjustment criteria parameter provided during the configuration step
a QoE map providing already measured processing task delay of the XR scene (e.g., rendering delay) for each set of QoE levels

As an alternative, to ease the QoE level selection process, the AS may directly select the appropriate QoE level for the whole scene ordered in the QoeLevels array (by decrementing/incrementing the QoE level if the delay needs to be reduced or increased respectively).

### Adjustment based on the "QoE_LEVEL_INCREASE_DECREASE"

In this case, the AS needs to determine which *flexible* object to select to increase (corresponding to the "QoE_LEVEL_INCREASE" message) or decrease (corresponding to "QoE_LEVEL_DECREASE" message) its QoE level.

The AS may rely on the QoE level determination step of the `441 application, by using the adjustment criteria parameter provided during the configuration step.

As an alternative, to ease the QoE level selection process, the AS may directly select the appropriate QoE level for the whole scene ordered in the QoeLevels array (by decrementing/incrementing the QoE level if the delay needs to be reduced or increased respectively).

### Adjustment Based on the "OBJECT_QoE_LEVEL_VALUE"

In this case, the AS gets directly the QoE levels of the flexible objects from the object adjustment request values provided by the UE.

As an alternative, the AS gets directly the QoE level for each object provided at the scene level in the QoeLevels array.

### Acknowledgment of the delay adjustment

If the AS has treated a delay adjustment request from the UE, the AS sends a corresponding adjustment acknowledgment message to the UE with the data provided in Table 6.

The adjustment acknowledgment message may be transmitted by using a dedicated WebRTC data channel. In some embodiments, this adjustment acknowledgment message may be transmitted in the RTP header extension of the rendered frame. In some embodiments, this adjustment acknowledgment message may use the RTCP Extended Reports in a similar manner as the QoE timing information (TS 26.565).

**Table 6.**

| **Name** | **Type** | **Cardinality** | **Description** |
|---|---|---|---|
| AdjustmentAckId | string | 1..1 | A unique identifier of the adjustment acknowledgment within the scope of the split rendering session. |
| AdjustmentRequestId | string | 1..1 | The unique identifier of the corresponding adjustment request. |
| ActiveQoeMetricId | string | 0..1 | The unique identifier of the adjusted QoE metric. |
| | | | This parameter may be transmitted only if the activeQoeMetric has changed since the last adjustment request. |
| | | | This identifier was exchanged between the UE and the AS during the configuration step. |
| DelayAdjustmentAck | string | 0..1 | Status of the delay adjustment for that QoE metric. Could be for example: |
| | | | - "DELAY_ADJUSTMENT_DONE", |
| | | | - "DELAY_ADJUSTMENT_FAILED" |
| | | | This parameter is provided when the selection of the QoE levels is not handled by the UE (the QoeLevelHandlingEntity configuration parameter is set to "AS"), and when the AdjustmentRequestType configuration parameter of Table 4 is set to "DELAY_ADJUSTMENT_REQUEST". |
| QoeLevelsAdjustmentRequestAck | string | 0..1 | Status of the QoE levels adjustment for that QoE metric. Could be for example: |
| | | | - "QoE_LEVELS_SETTING_DONE", |
| | | | - "QoE_LEVELS_SETTING_FAILED" |
| | | | This parameter is provided when the selection of the QoE levels is handled by the UE (the QoeLevelHandlingEntity configuration parameter is set to "UE"), and when the AdjustmentRequestType configuration parameter of Table 4 is set to "QoE_LEVEL_INCREASE_DECREASE". |
| ObjectAdjustmentAck | array | 0..1 | An array of the flexible objects for which adjustment requests have been treated by the AS for that QoE metric. |
| | | | This parameter is provided when the selection of the QoE levels is handled by the UE (the QoeLevelHandlingEntity configuration parameter is set to "UE"), and when the AdjustmentRequestType configuration parameter of Table 4 is set to "OBJECT_QoE_LEVEL_VALUE". |
| FlexibleObjectId | string | 1..1 | The unique identifier of the flexible object exchanged between the UE and the AS during the configuration step. |
| QoeLevelAck | string | 1..1 | Status of the QoE level setting for that flexible object. Could be for example: |
| | | | - "QoE_LEVEL_SETTING_DONE", |
| | | | - "QoE_LEVEL_SETTING_FAILED" |
| ObjectQoeLevelsStatus | array | 0..1 | An array providing the current set of QoE levels for the flexible objects. This information may be useful to the UE, especially in the case when an adjustment has failed. |
| FlexibleObjectId | string | 1..1 | The unique identifier of the flexible object exchanged between the UE and the AS during the configuration step. |
| QoeLevelId | string | 1..1 | The unique identifier of the current QoE level for that flexible object. This identifier was exchanged between the UE and the AS during the configuration step. |

In some embodiments, the unique identifier of the current QoE level (QoeLevelld) may be directly added to the element of the ObjectAdjustmentAck array.

### Mapping to the 3GPP SR_MSE and SR_IMS Technical Specifications

For some embodiments, the application may be supported by the 3GPP technical specifications SR_MSE (TS 26.565) and SR_IMS (TS 26.567) to handle QoE-based adjustments in a split rendering UE architecture. In the scope of the 3GPP SR_MSE and SR_IMS, the term "adaptation" is often used. This term is similar to the term "adjustment" of this application.

### SR_MSE TS 26.565

The call flows, configuration and runtime transmitted data of SR_MSE need to be modified to support this application on QoE-based delay adjustment.

The two following embodiments are considered for the support of a QoE-based adjustment for SR_MSE:
The addition of a new annex section C.3 for a new split rendering profile called "QoE-based delay adjustment profile"
The update of the adaptive split rendering profile of Annex C.2 of SR_MSE

### QoE-based delay adjustment profile as a new Annex C.3 section of SR_MSE

### C.3 QoE-based delay adjustment profile

### C.3.1 Introduction

This profile defines procedures, metadata formats and requirements for Split Rendering Client (SRC) and Split Rendering Server (SRS) to support QoE-based delay adjustment.

The QoE-based delay adjustment profile allows the SRS to adapt the rendering task delay to maintain an acceptable roundtrip delay (e.g., pose-to-render-to-photon or roundtrip interaction delay) based on QoE levels provided in a scene description file.

The SRC performs the management of the delay adjustment based on QoE metric measurements of an ongoing split rendering session. The SRC also exposes functions to an application for managing the delay adjustment.

### C.3.2 Procedure and Call Flows

For QoE-based delay adjustment, the general procedures and call flows in clause 5.2 are followed with the following additions and modifications.

The SRS and SRC should share a scene description. The implementation details may vary. The application provider may decide whether to provide identical scene descriptions to the SRS and the SRC or whether to provide a truncated version of the scene description to the SRC. For the QoE-based delay adjustment, the SRS and the SRC should negotiate the parameters of Table 7.

The Application Service Provider may provide the scene description resource to the SRS and SRC, for example, via M8 to SRC and via M2 to SRS.

The SRS and SRC agree on the configuration of the QoE-based delay adjustment during session negotiation, for example, in Step 5 of the procedure in clause 5.2.1.2.

The active QoE metric considered by the delay adjustment and initial QoE Levels for delay adjustment are indicated in the SR configuration.

In the rendering loop, exchange of QoE-based delay adjustment messages between the SRS and SRC is supported.

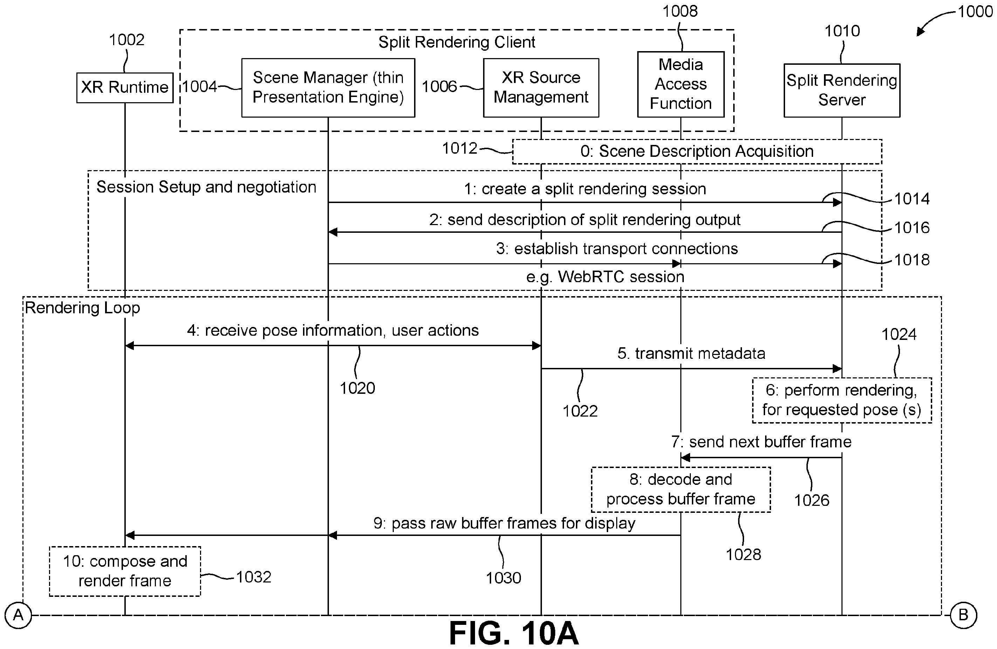

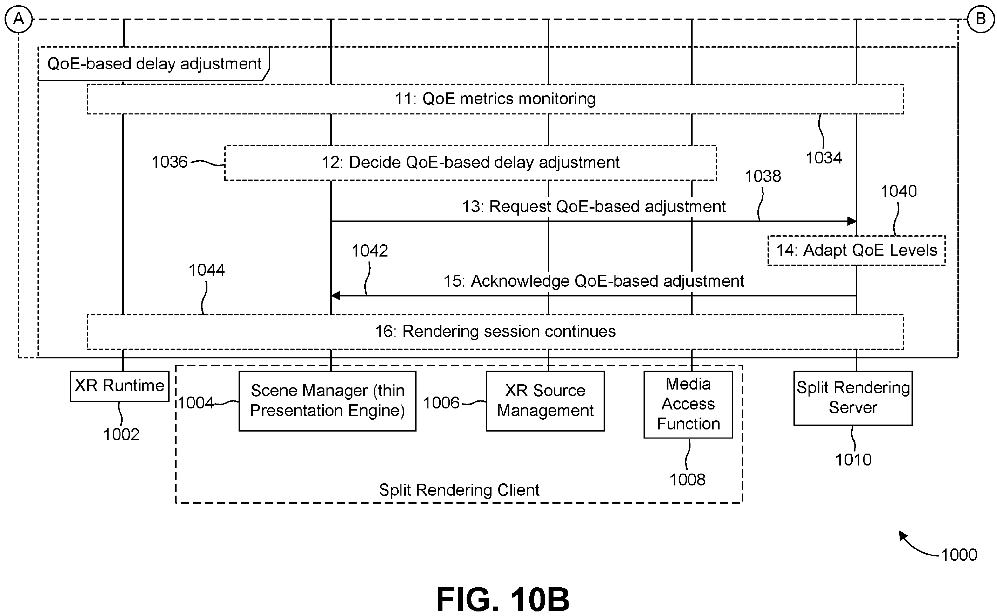

FIGs. 10A and 10B form a message sequencing diagram illustrating an example quality of experience-based delay adjustment profile process according to some embodiments. FIGs. 10A and 10B illustrate a high-level call flow set up and operation for a split rendering session which supports a QoE-based delay adjustment profile. In addition to the steps described in *TS 26.565*, clause 5.2.2, the steps shown in process 1000 may be applied for a QoE-based delay adjustment.:

In step 0 (1012), for some embodiments, the Split Rendering Client (SRC) and the Split Rendering Server (SRS) 1010 acquire scene description of the scene to be rendered during the split rendering session. The actual implementation of delivery of the scene description to the SRC and SRS 1010 is up to the application provider.

In step 1 (1014), the presentation engine (or scene manager for some embodiments) 1004 discovers and sets up a connection to the split rendering server 1010. The split rendering server 1010 provides information about its rendering capabilities and the XR runtime configuration, e.g the OpenXR configuration may be used for this purpose. The initial QoE Levels for delay adjustment and the active QoE metric are negotiated during this step 1014.

In step 2 (1016), in response, the split rendering server 1010 creates a description of the split rendering output and the input the SRS 1010 expects to receive from the UE.

In step 3 (1018), the presentation engine (or scene manager for some embodiments) 1004 requests the buffer streams from the Media Access Function (MAF) 1008. The MAF 1008, in turn, establishes a connection to the split rendering server 1010 to stream pose and retrieve split rendering buffers.

In step 4 (1020), the source manager 1006 retrieves pose and user input from the XR runtime 1002.

In step 5 (1022), the source manager 1006 shares the pose predictions and user input actions with the split rendering server.

In step 6 (1024), the split rendering server 1010 uses that information to render the frame.

In step 7 (1026), the rendered frame is encoded and streamed down to the MAF 1008.

In step 8 (1028), the MAF 1008 decodes and processes the received frame.

In step 9 (1030), the MAF 1008 passes the decoded frame to the Scene Manager which passes it to the XR Runtime.

In step 10 (1032), the XR runtime 1002 composes and renders the frame onto the display.

In step 11 (1034), the SRS 1010 and SRC measure and collect the active QoE metric (e.g., poseToRenderToPhoton, or roundtriplnteractionDelay) during the rendering loop.

In step 12 (1036), a trigger to adjust the active QoE metric being monitored occurs at the SRC. The trigger may be, for example, an indication that the measured delay (measuredDelay) of the QoE metric poseToRenderToPhoton is out of the acceptable delay range due to new network conditions. The SRC decides if a QoE-based delay adjustment is needed in the SRS and determines the new adjustment.

In step 13 (1038), the SRC sends to the SRS 1010 a request to adapt the active QoE metric. The content of request depends on the configuration of the QoE level handling entity and the type of adjustment request:
The SRC requests new QoE levels for flexible objects in the XR scene if the SRC handles the QoE Levels (QoeLevelHandlingEntity parameter is set to "SRC").
The SRC requests to increase or decrease the SRS delay budget for the QoE metric If the SRS handles the QoE Levels (QoeLevelHandlingEntity parameter is set to "SRS") and the type of adjustment request is set as delay adjustment AdjustmentRequestType parameter is set to "DELAY_ADJUSTMENT_REQUEST").
The SRC requests to the SRS to increase or decrease the QoE level of a flexible object If the SRS 1010 handles the QoE levels (QoeLevelHandlingEntity parameter is set to "SRS") and the type of adjustment request is set as QoE level increase or decrease (AdjustmentRequestType parameter is set to "QoE_LEVEL_INCREASE_DECREASE").

In step 14 (1040), the SRS 1010 changes QoE levels according to the QoE-based delay adjustment request.

In step 15 (1042), the SRS 1010 sends an acknowledgment of the QoE-based delay adjustment to the SRC.

In step 16 (1044), the rendering loop (steps 4 through 10) (1020, 1022, 1024, 1026, 1028, 1030, 1032) continues.

### C.3.3 Metadata Formats

### C.3.3.1 Configuration Format

The configuration format defined in TS 26.565, clause 8.4.2.2 with the additional fields defined in Table 7 shall be used for QoE-based configuration exchange in QoE-based delay adjustment profile.

**Table 7.**

| **Name** | **Type** | **Cardinality** | **Description** |
|---|---|---|---|
| QoeBasedConfiguration | object | 1..1 | An object containing the configuration parameters for the QoE-based delay adjustment. |
| ActiveQoeMetricId | string | 1..1 | A unique identifier of the QoE metric currently considered by the delay adjustment. |
| QoeLevelHandlingEntity | string | 1..1 | A parameter identifying which network entity (either the "SRC" or the "SRS") is handling the selection of the appropriate set of QoE levels based on the delay adjustment requirement for this active QoE metric. |
| AdjustmentRequestType | string | 1..1 | The type of the adjustment request parameters of Table 5. It could either be: |
| | | | - "DELAY_ADJUSTMENT_REQUEST": the content of the DelayAdjustmentRequest parameter is a signed delay adjustment value, |
| | | | - "QoE_LEVEL_INCREASE_DECREASE": the content of the QoeLevelsAdjustmentRequest parameter could either be: |
| | | | - "QoE_LEVEL_INCREASE": the QoE level of a flexible object shall be increased, |
| | | | - "QoE_LEVEL_DECREASE": the QoE level of a flexible object shall be decreased, |
| | | | - "OBJECT_QoE_LEVEL_VALUE": the content of the QoeLevelRequest parameter is a QoE level identifier for each flexible object |
| FlexibleObjects | array | 1..1 | An array of the flexible objects for which QoE levels are available for the adjustment of that QoE metric. |
| | | | This FlexibleObjects array may contain all or a subset of the flexible objects defined in the FlexibleObjects array of the 3gpp_scene_qoe glTF extension. |
| FlexibleObjectId | string | 1..1 | A unique identifier of the flexible object within the scope of the split rendering session. The index of that object in the FlexibleObjects array of the 3gpp_scene_qoe gITF extension may be used. |
| InitQoeLevel | string | 1..1 | The unique identifier of the QoE level of the flexible object identified by the FlexibleObjectld to be used at initialization. |
| QoeLevelIds | array | 1..1 | An array of the QoE levels for the flexible object identified by the FlexibleObjectId. |
| | | | This QoeLevellds array may contain all or a subset of the QoE levels defined in the QoeLevels array of the 3gpp_scene_qoe gITF extension. |
| QoeLevelId | string | 1..1 | A unique identifier of the QoE level of the flexible object identified by the FlexibleObjectId. The index of that QoE level in the QoeLevels array of that flexible object of the 3gpp_scene_qoe gITF extension may be used. |
| QoeMetrics | array | 1..1 | An array of the QoE metrics for which scene adjustment are available. |
| | | | This QoeMetrics array may contain all or a subset of the QoE metrics defined in the qoeMetrics array of the 3gpp_scene_qoe gITF extension. |
| QoeMetricId | string | 1..1 | A unique identifier of the QoE metric within the scope of the split rendering session. The index or the name of that metric in the QoeMetrics array of the 3gpp_scene_qoe gITF extension may be used. If the name of that QoE metric is chosen as unique ID, this name should be consistent with the name provided in the quality metrics report of TS 26.565,**Error! Reference source not found.** clause 9.3.5. |
| TargetDelay | number | 1..1 | The target delay for the QoE metric in millisecond. |
| MinimumDelay | number | 1..1 | The minimum delay for the QoE metric in millisecond. Measured delay between the MinimumDelay and MaximumDelay values does not require a delay adjustment. |
| MaximumDelay | number | 1..1 | The maximum delay for the QoE metric in millisecond. Measured delay between the MinimumDelay and MaximumDelay values does not require a delay adjustment. |
| MesurementPeriodicity | string | 1..1 | The periodicity of the delay measurement for that QoE metric. It may be expressed as a multiple of the rendering frame, e.g., "EVERY_5_FRAMES". This parameter should be consistent with the samplingPeriod of the MetricsReportingConfiguration defined in *Media Delivery: Interactions and APIs for Provisioning and Media Session Handling,* 3GPP, TS 26.510 ("*TS 26.510*"). |
| AdjustmentPeriodicity | string | 1..1 | The periodicity of the delay adjustment for that QoE metric. It may be expressed as a multiple of the measured delay samples, e.g., "EVERY_3_MEASUREMENT_SAMPLES". |

The objects in Table 7 shall be present as part of the extraConfigurations Object as defined in TS 26.565, clause 8.4.2.2 for extensibility of split rendering configuration format.

### C.3.3.2 Adjustment Format

During a split rendering session, the operating environment of the split rendering server, the split rendering client or the network conditions may change. Consequently, the roundtrip delay may need to be adapted to deliver a consistent QoE.

When QoE-based delay adjustment is enabled, the SRC checks for the active QoE metric being monitored if the measured delay is inside the acceptable delay range. If the measured delay is outside the acceptable delay range, the SRC decides a delay adjustment for that QoE metric and sends a QoE-based adjustment request to the SRS.

The SRS or SRC shall request a QoE-based delay adjustment by sending a message of the type "urn:3gpp:split-rendering:v1:qoeda".

The message shall be conformant to the metadata message format specified in TS 26.565, clause 8.5.1. The same message type shall be used to acknowledge, accept or reject the request by the receiver, with the message subtype identifying whether it is a request, acceptance, acknowledgement or rejection. The message shall follow the format in Table 8.

**Table 8.**

| **Name** | | | **Type** | **Cardinality** | **Description** |
|---|---|---|---|---|---|
| id | | | string | 1..1 | A unique identifier of the message in the scope of the data channel session. |
| type | | | string | 1..1 | urn:3gpp:split-rendering:v1:qoeda |
| message | | | object | 1..1 | Message content |
| | | subtype | string | 1..1 | An identifier of the subtype of the message, it may be a request (REQ) for QoE-based delay adjustment or acknowledgement (ACK), acceptance (OK) or rejection of a request (NOK). |
| | | Adjustmentld | string | 1..1 | An identifier of the adjustment message unique within the scope of the SR session. |
| | | | | | For messages indicating acceptance, acknowledgment or rejection, this identifier may correspond to the identifier created at the request. |
| | | ActiveQoeMetricld | string | 0..1 | The unique identifier of the QoE metric to be adjusted. |
| | | | | | This parameter may be transmitted only if the activeQoeMetric has changed since the last adjustment request. |
| | | | | | This identifier was exchanged between the SRC and the SRS during the configuration step. |
| | | QoeAdjustmentRequest | object | 0..1 | An object containing the request information for the QoE-based delay adjustment. |
| | | DelayAdjustmentRequest | number | 0..1 | Signed delay adjustment value derived from the equation (1): |
| | | | | | adjustmentDelay = TargetDelay - measuredDelay (1) |
| | | | | | The measuredDelay is determined during the step 12 (1036) of the call flow of FIG. 10B. This parameter is provided when the selection of the QoE levels is not handled by the SRC (the QoeLevelHandlingEntity configuration parameter is set to "SRS"), and when the AdjustmentRequestType configuration parameter is set to |
| | | | | | "DELAY_ADJUSTMENT_REQUEST". |
| | | QoeLevelsAdjustmentRequest | string | 0..1 | The value could either be: |
| | | | | | - "QoE_LEVEL_INCREASE": the QoE level of a flexible object shall be increased, |
| | | | | | - "QoE_LEVEL_DECREASE": the QoE level of a flexible object shall be decreased |
| | | | | | This parameter is provided when the selection of the QoE levels is handled by the SRC (the QoeLevelHandlingEntity configuration parameter is set to "SRC"), and when the AdjustmentRequestType configuration parameter is set to |
| | | | | | "QoE_LEVEL_INCREASE_DECREASE". |
| | | ObjectAdjustmentRequest | array | 0..1 | An array of the flexible objects for which QoE levels need to be set for that QoE metric. |
| | | | | | This parameter is provided when the selection of the QoE levels is handled by the SRC (the QoeLevelHandlingEntity configuration parameter is set to "SRC"), and when the AdjustmentRequestType configuration parameter is set to |
| | | | | | "OBJECT_QoE_LEVEL_VALUE". |
| | | FlexibleObjectId | string | 1..1 | The unique identifier of the flexible object exchanged between the SRC and the SRS during the configuration step. |
| | | QoeLevelRequest | string | 1..1 | The unique identifier of the QoE level to be set for that flexible object. This identifier was exchanged between the SRC and the SRS during the configuration step. |
| | QoeAdjustmentAcK | | object | 0..1 | An object containing the information for acknowledgement (ACK), acceptance (OK) or rejection of a QoE-based delay adjustment. |
| | | DelayAdjustmentAck | string | 0..1 | Status of the delay adjustment for that QoE metric. Could be for example: |
| | | | | | - "DELAY_ADJUSTMENT_DONE", |
| | | | | | - "DELAY_ADJUSTMENT_FAILED" |
| | | | | | This parameter is provided when the selection of the QoE levels is not handled by the SRC (the QoeLevelHandlingEntity configuration parameter is set to "SRS"), and when the AdjustmentRequestType configuration parameter is set to |
| | | | | | "DELAY_ADJUSTMENT_REQUEST". |
| | | QoeLevelsAdjustmentAck | string | 0..1 | Status of the QoE levels adjustment for that QoE metric. Could be for example: |
| | | | | | - "QoE_LEVELS_SETTING_DONE", |
| | | | | | - "QoE_LEVELS_SETTING_FAILED" |
| | | | | | This parameter is provided when the selection of the QoE levels is handled by the SRC (the QoeLevelHandlingEntity configuration parameter is set to "SRC"), and when the AdjustmentRequestType configuration parameter is set to |
| | | | | | "QoE_LEVEL_INCREASE_DECREASE". |
| | | ObjectAdjustmentAck | array | 0..1 | An array of the flexible objects for which adjustment requests have been treated by the AS for that QoE metric. |
| | | | | | This parameter is provided when the selection of the QoE levels is handled by the SRC (the QoeLevelHandlingEntity configuration parameter is set to "SRC"), and when the AdjustmentRequestType configuration parameter is set to |
| | | | | | "OBJECT_QoE_LEVEL_VALUE". |
| | | FlexibleObjectId | string | 1..1 | The unique identifier of the flexible object exchanged between the SRC and the SRS during the configuration step. |
| | | QoeLevelAck | string | 1..1 | Status of the QoE level setting for that flexible object. Could be for example: |
| | | | | | - "QoE_LEVEL_SETTING_DONE", |
| | | | | | - "QoE_LEVEL_SETTING_FAILED" |
| | ObjectQoeLevelsStatus | | array | 0..1 | An array providing the current set of QoE levels for the flexible objects. This information may be useful to the SRC, especially in the case when an adjustment has failed. |
| | | FlexibleObjectId | string | 1..1 | The unique identifier of the flexible object exchanged between the SRC and the SRS during the configuration step. |
| | | QoeLevelId | string | 1..1 | The unique identifier of the current QoE level for that flexible object. This identifier was exchanged between the SRC and the SRS during the configuration step. |

Adjustment messages indicating acceptance, acknowledgment or rejection of a QoE-based delay adjustment request may not include the DelayAdjustmentRequest, QoeLevelsAdjustmentRequest and ObjectAdjustmentRequest objects.

Adjustment request messages should not include the DelayAdjustmentAck, QoeLevelsAdjustmentAck, ObjectAdjustmentAck objects.

There are three types of data for the QoE-based adjustment request depending on the capability of the SRC to handle or not the selection of the appropriate set of QoE levels based on the delay adjustment requirement and based on the AdjustmentRequestType configuration parameter:
If the SRC is not handling the selection of the QoE levels (the QoeLevelHandlingEntity configuration parameter is set to "SRS"), the AdjustmentRequestType configuration parameter is set to "DELAY_ADJUSTMENT_REQUEST", and the SRC sends directly the appropriate delay adjustment value for the QoE metric delay adjustment to the SRS.
If the SRC is handling the selection of the QoE levels (the QoeLevelHandlingEntity configuration parameter is set to "SRC"), the SRC needs to determine the appropriate QoE levels of the flexible objects:
If the AdjustmentRequestType configuration parameter is set to "QoE_LEVEL_INCREASE_DECREASE", The SRC sends either the "QoE_LEVEL_INCREASE" or "QoE_LEVEL_DECREASE" parameter to the SRS to increase or decrease the QoE level of a flexible object. It is under the responsibility of the SRS to select the appropriate flexible object.
If the AdjustmentRequestType configuration parameter is set to "OBJECT_QoE_LEVEL_VALUE", the SRC sends the QoE levels to be set for each flexible object. To determine the QoE level, the SRC may use a QoE map providing already measured processing task delay of the XR scene (e.g., rendering delay) for each set of QoE levels. As an alternative, the SRC may also directly select the appropriate QoE levels for the whole scene ordered in the QoeLevels array (by decrementing/incrementing the QoE level if the delay needs to be reduced or increased respectively).

### C.3.4 SRC Capabilities

### C.3.4.1 Metadata Formats

For XR-Pose-Cap 1, the SRC shall be able to retrieve one or more pose predictions for each view and for every frame to be rendered. The pose prediction shall be formatted according to TS 26.565, clause 8.3.2.2.

For XR-Pose-Cap 2, the SRC shall be able to retrieve and collect the user actions that occurred during an identified time interval. The action information shall be formatted according to TS 26.565, clause 8.3.2.3

For XR-QoeLevels-Cap 1, when the SRC is not handling the selection of the QoE levels, the SRC shall be able to handle the delay adjustments of QoE metrics in a split rendering session during an identified time interval. The QoE metrics adjustment information shall be formatted according to clause C.3.3.2.

For XR-QoeLevels-Cap 2, when the SRC is handling the selection of the QoE levels, the SRC shall be able to receive, retrieve and collect identifiers and QoE levels of objects in a scene in a split rendering session during an identified time interval. The QoE levels information shall be formatted according to clause C.3.3.2.

### C.3.4.2 Rendering format description

The SRC and SRS shall comply with rendering format description in TS 26.565, Annex C1.4.

The SRC shall support the 3GPP_node_prerendered extension defined in C1.4.2, However, the extension may be used on non-root nodes.

### C.3.4.3 Scene Processing and Rendering Capabilities

The SRC shall have the SD-Rendering-gltf-core scene processing capabilities defined in clause 9.2 of technical specification Media Capabilities for Augmented Reality, 3GPP, TS 26.119 ("*TS 26.119*").

SD-Rendering-gltf-core enables basic compatibility of an SRC with the QoE-based delay adjustment profile for simple use cases, where the SRC handles the selection of the QoE levels of objects in a scene.

Depending on the device type, the SRC shall have scene capabilities defined for each device type in clause 10 of *TS 26.119.*

In addition, an SRC that complies with the QoE-based delay adjustment profile shall support the 3GPP_scene_qoe glTF extension.

### C.3.5 SRS Capabilities

### C.3.5.1 Metadata Formats

The SRS shall support the metadata formats for pose and action defined in TS 26.565, clause **8.3.2Error! Reference source not found..** In addition, the SRS shall support the metadata formats defined in Annex C.3.3 and complement the metadata capabilities defined in Annex C.3.4.1. This shall include the ability to receive and process messages corresponding to metadata capabilities defined in Annex C.3.4.1 and formatted according to Annex C.3.3 and clause 8.3.2 of *TS 26.565.*

### C.3.5.2 Scene Processing and Rendering Capabilities

The SRS shall support the support the description of the rendering format as defined in in C1.1.4 of *TS 26.565*.

Depending on the device type of the SRC participating in a split rendering session, the SRS should support the required and recommended scene processing capabilities defined in *TS 26.119,* clause 10.3.5 for device type 2, clause 10.4.5 for device type 3, and clause 10.5.5 for device type 4.

In addition, an SRS that complies with the QoE-based delay adjustment profile shall support the 3GPP_scene_qoe glTF extension as defined in Annex C.3.8.

### C.3.6 Profile identifier

If the QoE-based delay adjustment profile is used in monoscopic mode the type urn:3gpp:sr-mse:src:profile: qoedasr2dpixelstreaming shall be included in *splitRenderingProfile* parameter when the SRC signals SRS the Split Rendering Configuration [8.4.2.2 of TS 26.565].

If the adaptive split rendering profile is used in in stereoscopic mode the type urn:3gpp:sr-mse:src:profile: qoedasr3dpixelstreaming shall be included in *splitRenderingProfile* parameter when the SRC signals SRS the Split Rendering Configuration [8.4.2.2 of TS 26.565].

### C.3.7 Extension to client API functions

The SRC should perform QoE-based delay adjustment which may be based on metrics reports of an ongoing split rendering session, scene being rendered and UE operating conditions. For QoE-based delay adjustment, the SRC exposes functions to load and update scene description resources. The SRC may also expose functions to an application to allow application developers to deploy custom logic for QoE-based delay adjustment (Table 9). Table 9 lists an extension to SRC API functions.

**Table 9.**

| **Method** | **Parameters In** | **Parameters Out** | **State** After **Success** | **Description** |
|---|---|---|---|---|
| setScene() | - srSessionId | - status | N/A | The application requests the SRC to load a scene description resource for rendering in the split rendering session. |
| | - scene description resource | | | |
| updateScene() | - srSessionId | - status | N/A | The application requests the SRC to update a scene description resource being rendered in the split rendering session. |
| | - scene description resource | | | |

For some embodiments, the SRC may expose the functions shown below (in Table 10) to the application to allow application developers to deploy custom QoE-based delay adjustment logic.

**Table 10.**

| **Method** | **Parameters In** | **Parameters Out** | **State After Success** | **Description** |
|---|---|---|---|---|
| updateQoeAdjustment() | - srSessionId | - status | N/A | The application requests or queries the SRC for a new or the current QoE-based delay adjustment. |
| | - QoeAdjusmtmentRequest | - QoeAdjustmmentAcK | | |
| setActiveQoeMetric() | - srSessionId | -status | N/A | The application requests or queries the SRC for a new QoE metric or the current QoE metric in use by the delay adjustment. |
| | - ActiveQoeMetricId | - ActiveQoeMetricId | | |

The parameters shown in Table 10 are defined below:
srSessionld: defined in TS 26.565, clause 9.2.
scene description resource: A scene description resource compliant with capabilities specified in Annex clause C.3.5.2. The scene description resource may be a subset of the scene description resource being rendered by the SRS. It is assumed that the application provider makes the scene description resource available to the application, for example, via M8.
status: indicates whether the call was successful (OK) or not successful (FAIL)
QoeAdjusmtmentRequest: A pointer to a QoeAdjusmtmentRequest object defined in Table 8.
QoeAdjusmtmentAck: A pointer to a QoeAdjusmtmentAck object defined in Table 8.
ActiveQoeMetricid: The unique identifier of the QoE metric currently considered by the delay adjustment.

### C.3.8 Description of the specific glTF extension

The 3GPP_scene_qoe glTF extension is a scene-level extension providing the following information for each QoE delay metric:
The identification of which parts/entities (e.g., nodes of the graph representing objects, animation) of the XR scene are flexible, which parts/entities provide several representations corresponding to several QoE levels to be used for the delay adjustment
The identification of the relevant QoE metrics as an XR experience may consider several QoE metrics, and the need of adjusting one of them may evolve depending on the user navigation/interaction with the XR scene at this time
Only one QoE metric (i.e. active QoE metric) is selected and considered by the delay adjustment at any time

The semantics of the 3GPP_scene_qoe glTF extension are provided in Table 11.

**Table 11.**

| **Name** | | **Type** | **Use** | **Default** | **Description** |
|---|---|---|---|---|---|
| flexibleObjects | | array(object) | M | | An array of the flexible objects for which QoE levels are available for the delay adjustment. |
| | qoeLevels | array(number) | M | | An array containing the indices of the nodes of the gITF nodes array corresponding to the flexible object representation for each QoE level. |
| qoeMetrics | | array(object) | M | | An array of the QoE metrics for which scene adjustments are available. |
| | name | string | M | | The name of the QoE metric. E.g., "pose-to-render-to-photon", "roundtrip interaction delay". This name should be consistent with the name provided in the quality metrics report of TS26.565 clause 9.3.5. |
| | preferredQoeCombinations | array(array(pair numbers)) | O | N/A | An array containing the preferred combinations of QoE level(s) between flexible objects. Each element of this array contains an array of indices pairs where: |
| | | | | | - the 1^{st} index of the pair corresponds to the index of the flexible object in the *flexibleObjects* array, |
| | | | | | - the 2^{nd} index of the pair corresponds to the index of the QoE level of that flexible object in the *qoeLevels* array |
| | forbiddenQoeCombinations | array(array(pair numbers)) | O | N/A | An array containing the forbidden combinations of QoE level(s) between flexible objects. Each element of this array contains an array of indices pairs where: |
| | | | | | - the 1^{st} index of the pair corresponds to the index of the flexible object in the *flexibleObjects* array, |
| | | | | | - the 2^{nd} index of the pair corresponds to the index of the QoE level of that flexible object in the *qoeLevels* array |
| | adjustmentCriteria | string | O | "VIEWI NG_DI STANC E" | Information to guide the application of determining the next QoE levels when more than one *flexible* objects are defined in the XR scene. This information may be either: |
| | | | | | - "VIEWING_DISTANCE": for increasing the QoE level (by increasing the processing delay) for close object(s) if the measured delay is below the delay metric and by decreasing the QoE level (by decreasing the processing delay) for far object(s) if the measured delay is above the delay metric |
| | | | | | - "FIELD_OF VIEW": for increasing the QoE level (by increasing the processing delay) for object(s) in the center of the FoV if the measured delay is below the delay metric and by decreasing the QoE level (by decreasing the processing delay) for object(s) located at the borders of the FoV if the measured delay is above the delay metric |
| | | | | | - "SCREEN_COVERAGE": for increasing the QoE level (by increasing the processing delay) for object(s) having larger screen coverage if the measured delay is below the delay metric and by decreasing the QoE level (by decreasing the processing delay) for object(s) having smaller screen coverage if the measured delay is above the delay metric |
| | adjustmentCriteria | string | O | "VIEWI NG_DI STANC E" | Information to guide the application of determining the next QoE levels when more than one *flexible* objects are defined in the XR scene. This information may be: |
| | | | | | - "VIEWING_DISTANCE": for increasing the QoE level (by increasing processing delay) for close object(s) if the measured delay is below the delay metric and by decreasing the QoE level (by decreasing processing delay) for far object(s) if the measured delay is above the delay metric |
| | | | | | - "FIELD_OF VIEW": for increasing the QoE level (by increasing processing delay) for object(s) in the center of the FoV if the measured delay is below the delay metric and by decreasing the QoE level (by decreasing processing delay) for object(s) located at the borders of the FoV if the measured delay is above the delay metric |
| | | | | | - "SCREEN_COVERAGE": for increasing the QoE level (by increasing processing delay) for object(s) having larger screen coverage if the measured delay is below the delay metric and by decreasing the QoE level (by decreasing processing delay) for object(s) having smaller screen coverage if the measured delay is above the delay metric |

The JSON scheme for the 3GPP_scene_qoe gITF extension is provided in Code Listing 3.

| |
|---|
| ```
 {
     "$schema": "http://json-schema.org/draft-07/schema",
``` |
| ```
     "title": "3GPP_scene_qoe",
     "type": "object",
     "description": "glTF extension to describe XR scene flexibility for QoE",
     "allOf": [ { "$ref": "glTFProperty.schema.json"} ],
          "flexibleObjects": {
              "type": "array",
              "description": "Array of flexible objects for delay adjustments",
             "items": {
                   "$ref": "3GPP_scene_qoe.qoeMetric.flexibleObject.schema.json"
              },
              "minltems": 1
          },
          "qoeMetrics": {
              "type": "array",
              "description": "QoE metrics for which adjustments are available",
             "items": {
                   "$ref": "3GPP_scene_qoe.qoeMetric.schema.json"
              },
              "minltems": 1
          },
          "extensions": {},
          "extras": {}
     },
     "required": ["flexibleObjects","qoeMetrics"]
 }
 {
     "$schema" : "http://json-schema.org/draft-07/schema",
     "title" : "3GPP_scene_qoe.qoeMetric.flexibleObject",
     "type" : "object",
``` |
| ```
     "description": "A flexible object providing several QoE levels",
     "allOf": [ { "$ref": "glTFProperty.schema.json"} ],
     "properties" : {
           "qoeLevels": {
              "type": "array",
                "description": "Array containing the indices of the nodes of the
                glTF nodes array corresponding to the flexible object representation for each
                QoE level",
             "items": {
                   "type": "number"
              },
              "minltems": 1
          },
          "extensions": {},
          "extras": {}
     },
     "required": ["qoeLevels"]
 }
 {
     "$schema" : "http://json-schema.org/draft-07/schema",
     "title" : "3GPP_scene_qoe.qoeMetric",
     "type" : "object",
     "description": "A QoE metric for which delay adjustments are available",
     "allOf": [ { "$ref": "glTFProperty.schema.json"} ],
     "properties" : {
          "name": {
              "type": "string",
              "description": "The name of the QoE metric",
          },
          "preferredQoeCombinations": {
``` |
| ```
              "type": "array",
               "description": "Array of preferred combinations between QoE levels
               of flexible objects. An element of this array contains an array of indices pairs
 (object ID, QoE level ID)",
             "items": {
                  "$ref": "3GPP_scene_qoe.qoeMetric.qoeCombinations.schema.json"
              },
              "minItems": 0
          },
          "forbiddenQoeCombinations": {
              "type": "array",
               "description": "Array of forbidden combinations between QoE levels
               of flexible objects. An element of this array contains an array of indices pairs
 (object ID, QoE level ID)",
             "items": {
                  "$ref": "3GPP_scene_qoe.qoeMetric.qoeCombinations.schema.json"
              },
              "minItems": 0
          },
          "adjustmentCriteria": {
              "type": "string",
              "description": "Criteria to guide the application to select the QoE
              levels for each flexible object",
              "enum": ["VIEWING_DISTANCE", "FIELD_OF_VIEW", "SCREEN_COVERAGE"]
          },
          "extensions": {},
          "extras": {}
     },
     "required": ["name"]
 }
 {
``` |
| ```
     "$schema" : "http://json-schema.org/draft-07/schema",
     "title" : "3GPP_scene_qoe.qoeMetric.qoeCombinations",
     "type" : "array",
     "description": " Array of indices pairs (object ID, QoE level ID)",
     "items": {
           "type": "pair of numbers"
     },
     "minltems": 1
 }
``` |

### Code Listing 3.

### Update of the Adaptive split rendering profile of Annex C.2

### C.2 Adaptive Split Rendering with QoE-based delay adjustment Profile

### C.2.1 Introduction

This profile defines procedures and requirements for SRS and SRC to support split rendering features beyond a remote rendering paradigm.

Adaptive split rendering profile allows the SRC to render some objects of a scene locally and the rendering split can be adapted between the SRS and SRC during a session. QoE-based delay adjustment allows to adjust roundtrip delays while maintaining an acceptable QoE. The adaptation of the rendering split or QoE-based delay may be triggered either by the SRS or the SRC to maintain a consistent QoE of the SR session or to accommodate changes in operating conditions. The triggers may be, for example, channel conditions, SRC or SRS conditions or defined by the application provider.

The delay adjustments are based on QoE levels introduced in the scene description and some information exchanged between the SRC and the SRS during the rendering loop.

To successfully render two parts of a scene separately in a split fashion, additional aspects of the rendering process need to be considered. Two basic requirements are maintaining a coherent state of the scene between the SRS and SRC and awareness of rendering split. Another requirement is seamless composition and display of the media rendered by the SRS and SRC into a frame to be displayed.

### C.2.2 Procedures and Call Flows

For adaptive split rendering, the general procedures and call flows in clause 5.2 are followed with the following additions and modifications.
The SRS and SRC should share a scene description. The implementation details may vary. The application provider may decide whether to provide identical scene descriptions to the SRS and the SRC or whether to provide a truncated version of the scene description to the SRC. For the QoE-based delay adjustment, the SRS and the SRC should negotiate the parameters of the split rendering configuration format of section C.2.3.1.

The Application Service Provider may provide the scene description resource to the SRS and SRC, for example, via M8 to SRC and via M2 to SRS.
The SRS and SRC agree on an initial rendering split during session negotiation and the states to be synchronized and the configuration of the QoE-based delay adjustment, for example, in Step 5 of the procedure in clause 5.2.1.2. The priority between both adaptation mechanisms, split or QoE-based, is determined by the application and may be determined, for example, following SRC Capabilities and the reactiveness/responsiveness of the adaptation.
The initial rendering split and states to be synchronized are indicated in the SR configuration. The active QoE metric considered by the delay adjustment and initial QoE Level for delay adjustment are indicated in the SR configuration.
In the rendering loop, exchange of split adaptation messages and state synchronization and QoE-based delay adjustment messages between the SRS and SRC is supported.

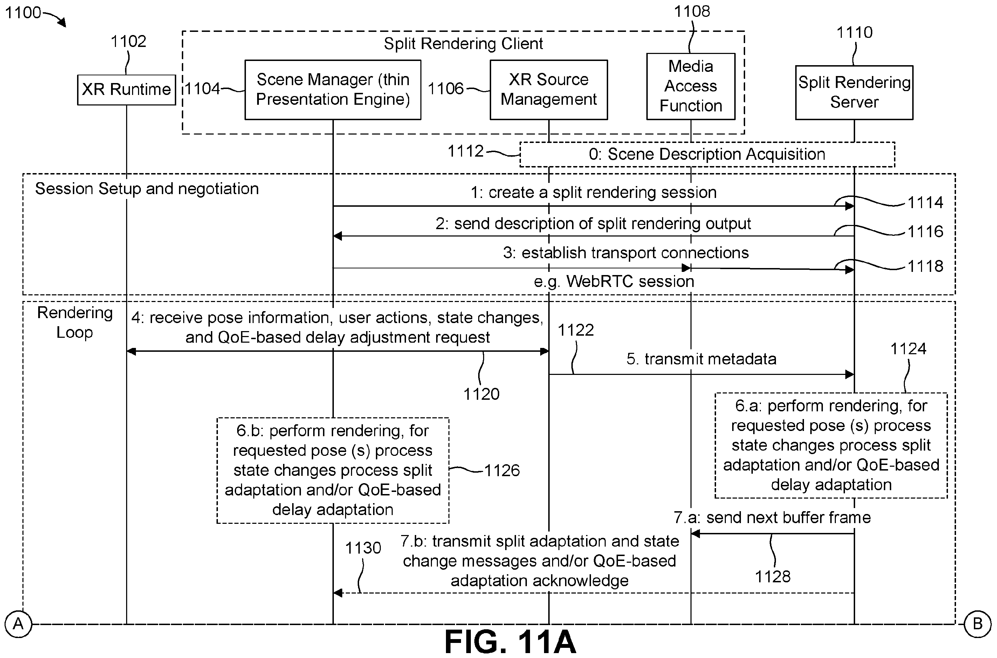

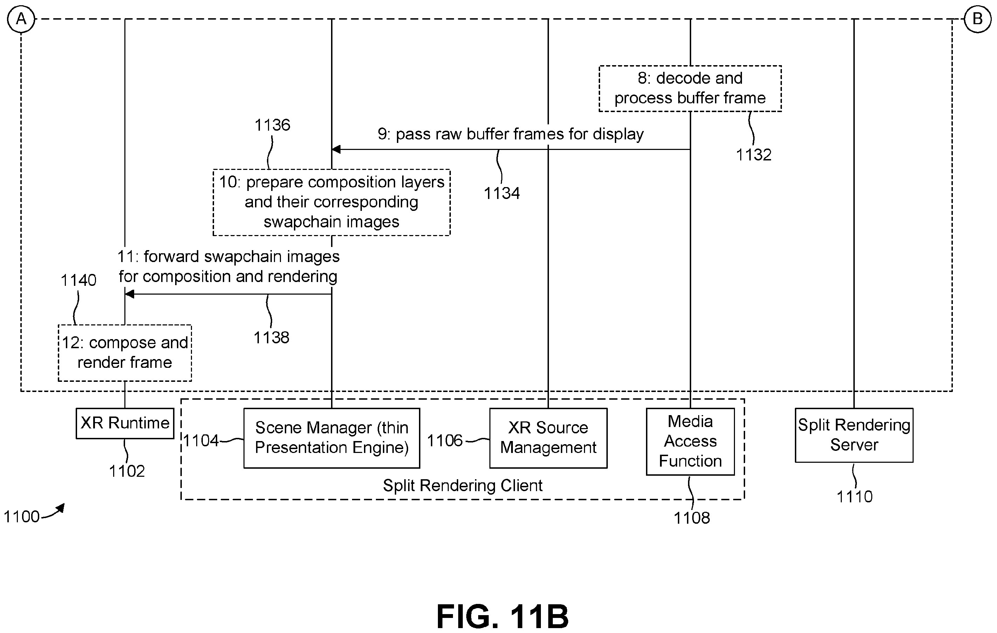

FIGs. 11A and 11B form a message sequencing diagram illustrating an example process for adaptive split rendering profile with quality of experience-based delay adjustment according to some embodiments. FIGs. 11A and 11B may be labeled as "FIG. C.2.2-1" elsewhere. For some embodiments, a split rendering session may support an adaptive split rendering profile. FIG. 11A and 11B show an example process 1100.

In step 0 (1112), for some embodiments, the Split Rendering Client (SRC) and the Split Rendering Server (SRS) 1110 acquire scene description of the scene to be rendered during the split rendering session. The actual implementation of delivery of the scene description by / to the SRC and SRS may vary based on the application provider.

In step 1 (1114), the presentation engine (or scene manager for some embodiments) 1104 discovers the split rendering server 1110 and sets up a connection to the SRS 1110. The SRS 1110 provides information about its rendering capabilities and the XR runtime configuration. For example, the OpenXR configuration may be used for this purpose. States to be synchronized, the initial QoE Level for delay adjustment, the active QoE metric, and the initial rendering split are negotiated during this step.

In step 2 (1116), in response, the split rendering server 1110 creates a description of the split rendering output and the input the SRS 1110 expects to receive from the UE.

In step 3 (1118), the presentation engine (or scene manager for some embodiments) 1104 requests the buffer streams from the MAF 1108. The MAF 1108, in turn, establishes a connection to the split rendering server 1110 to stream pose and retrieve split rendering buffers.

In step 4 (1120), the source manager 1106 retrieves pose and user input from the XR runtime 1102. The application determines measured delay (measuredDelay) from the active QoE metric being monitored and determines state changes in negotiated states. The scene manager 1104 may request QoE-based delay and/or split adaptation.

In step 5 (1122), the XR source manager 1106 shares pose predictions, user input actions, state changes, QoE-based delay messages, and/or split adaptation messages with the split rendering server 1110.

In step 6a (1124), the split rendering server 1110 uses step 5's information to update states, to update the split, and/or to change QoE level for delay adjustment of some objects of the scene that are rendered by the SRS 1110. The SRS 1110 also renders the frame.

In step 6b (1126), the scene manager 1104 updates states, update the split, and/or change the QoE level for delay adjustment of some objects of the scene that are rendered in the SRC and renders the frame.

In step 7a (1128), the rendered frame is encoded and streamed to the Media Access Function (MAF) 1108.

In step 7b (1130), for some embodiments, a split adaptation may be transmitted by the SRS 1110 to the scene manager 1104, and a state change may occur. Furthermore, QoE-based delay adjustment acknowledge messages may be shared with the presentation engine 1110.

In step 8 (1132), the received media frames are decoded and processed.

In step 9 (1134), the raw buffer frames are passed by the media access function 1108 to the scene manager 1104. This data includes the frames received from the SRS and the frames rendered locally by the PE,

In step 10 (1136), the scene manager 1104 prepares composition layers and their corresponding swapchain images.

In step 11 (1138), the swapchain images are forwarded by the scene manager 1104 (which may be a thin presentation engine for some embodiments) to the XR runtime 1102 for composition and rendering,

In step 12 (1140), the frames are composed and displayed via the XR runtime 1102.

### C.2.3 Metadata Formats

### C.2.3.1 Split Rendering Configuration Format

The configuration format defined in TS 26.565, clause 8.4.2.2 with the additional fields defined below shall be used for split rendering configuration exchange in adaptive split rendering with QoE-based delay adjustment profile.

**Table 12.**

| **Name** | | **Type** | **Cardinality** | **Description** |
|---|---|---|---|---|
| renderingSplit | | object | 0..1 | A object identifying objects to be rendered and where they are to be rendered (SRS or SRC), for example, as a dictionary with keys "SRS" and "SRC" and lists of object indices from a scene description or a scene graph |
| synchronizedStatesInit | | object | 0..1 | A object identifying states to be synchronized between the SRS and SRC and their initial state |
| | states | object | 1..1 | A list of state identifiers, their current values |
| | state | string /number | 1..n | Identifier of a state |
| | initVal | string | 1..n | Initial value of the state |
| | stateVals | array | 1..1 | An array of values possible for the state |
| QoeBasedConfiguration | | object | 0..1 | An object containing the configuration parameters for the QoE-based delay adjustment. |
| | ActiveQoeMetricld | string | 1..1 | A unique identifier of the QoE metric currently considered by the delay adjustment. |
| | QoeLevelHandlingEntity | string | 1..1 | A parameter identifying which network entity (either the "SRC" or the "SRS") is handling the selection of the appropriate set of QoE levels based on the delay adjustment requirement for this active QoE metric. |
| | AdjustmentRequestType | string | 1..1 | The type of the adjustment request parameters of Table 5. It could either be: |
| | | | | - "DELAY_ADJUSTMENT_REQUEST": the content of the DelayAdjustmentRequest parameter is a signed delay adjustment value, |
| | | | | - "QoE_LEVEL_INCREASE_DECREASE": the content of the QoeLevelsAdjustmentRequest parameter could either be: |
| | | | | - "QoE_LEVEL_INCREASE": the QoE level of a flexible object shall be increased, |
| | | | | - "QoE_LEVEL_DECREASE": the QoE level of a flexible object shall be decreased, |
| | | | | "OBJECT_QoE_LEVEL_VALUE": the content of the QoeLevelRequest parameter is a QoE level identifier for each flexible object |
| | FlexibleObjects | array | 1..1 | An array of the flexible objects for which QoE levels are available for the adjustment of that QoE metric. |
| | | | | This FlexibleObjects array may contain all or a subset of the flexible objects defined in the FlexibleObjects array of the 3gpp_scene_qoe gITF extension. |
| | FlexibleObjectId | string | 1..1 | A unique identifier of the flexible object within the scope of the split rendering session. The index of that object in the FlexibleObjects array of the 3gpp_scene_qoe gITF extension may be used. |
| | InitQoeLevel | string | 1..1 | The unique identifier of the QoE level of the flexible object identified by the FlexibleObjectId to be used at initialization. |
| | QoeLevelIds | array | 1..1 | An array of the QoE levels for the flexible object identified by the FlexibleObjectld. |
| | | | | This QoeLevellds array may contain all or a subset of the QoE levels defined in the QoeLevels array of the 3gpp_scene_qoe gITF extension. |
| | QoeLevelId | string | 1..1 | A unique identifier of the QoE level of the flexible object identified by the FlexibleObjectld. The index of that QoE level in the QoeLevels array of that flexible object of the 3gpp_scene_qoe gITF extension may be used. |
| QoeMetrics | | array | 1..1 | An array of the QoE metrics for which scene adjustment are available. |
| | | | | This QoeMetrics array may contain all or a subset of the QoE metrics defined in the qoeMetrics array of the 3gpp_scene_qoe gITF extension. |
| | QoeMetricId | string | 1..1 | A unique identifier of the QoE metric within the scope of the split rendering session. The index or the name of that metric in the QoeMetrics array of the 3gpp_scene_qoe gITF extension may be used. If the name of that QoE metric is chosen as unique ID, this name should be consistent with the name provided in the quality metrics report of TS 26.565, clause 9.3.5. |
| | TargetDelay | number | 1..1 | The target delay for the QoE metric in millisecond. |
| | MinimumDelay | number | 1..1 | The minimum delay for the QoE metric in millisecond. Measured delay between the MinimumDelay and MaximumDelay values does not require a delay adjustment. |
| | MaximumDelay | number | 1..1 | The maximum delay for the QoE metric in millisecond. Measured delay between the MinimumDelay and MaximumDelay values does not require a delay adjustment. |
| | MesurementPeriodicity | string | 1..1 | The periodicity of the delay measurement for that QoE metric. It may be expressed as a multiple of the rendering frame, e.g., "EVERY_5_FRAMES". This parameter should be consistent with the samplingPeriod of the MetricsReportingConfiguration defined in TS 26.510. |
| | AdjustmentPeriodicity | string | 1..1 | The periodicity of the delay adjustment for that QoE metric. It may be expressed as a multiple of the measured delay samples, e.g., "EVERY_3_MEASUREMENT_SAMPLES". |

These renderingSplit and/or QoeBasedConfiguration objects shall be present as part of the extraConfigurations Object as defined in TS 26.565, clause 8.4.2.2 for extensibility of split rendering configuration format.

### C.2.3.2 Adaptation Message Format

During a split rendering session, the operating environment of the split rendering server, the split rendering client or the network conditions may change. Consequently, the rendering split may need to be adapted to deliver a consistent QoE.

For QoE-based adjustment, the SRC checks for the active QoE metric being monitored if the measured delay is inside an acceptable delay range. If the measured delay (measuredDelay) is outside the acceptable delay range, the SRC decides a delay adjustment for that QoE metric and sends a QoE-based adjustment request to the SRS.

When adaptive split rendering and/or adaptative QoE level are enabled, the SRS or SRC shall request a new rendering split and/or a QoE-based delay adjustment by sending a message of the type "urn :3gpp:split-rendering:v1 :asrp:sr-split".

The message shall be conformant to the metadata message format specified in clause 8.5.1 (of TS 26.565). The same message type shall be used to acknowledge, accept or reject the request by the receiver, with the message subtype identifying whether it is a request, acceptance, acknowledgement or rejection. The message shall follow the format in Table 13, which shows a message format for split or QoE-based adaptation messages.

**Table 13.**

| **Name** | | | | **Type** | **Cardinality** | **Description** |
|---|---|---|---|---|---|---|
| id | | | | string | 1..1 | A unique identifier of the message in the scope of the data channel session. |
| type | | | | string | 1..1 | urn:3gpp:split-rendering:v1:asrp:sr-split |
| message | | | | object | 1..1 | Message content |
| | subtype | | | string | 1..1 | An identifier of the subtype of the message, it may be a request (REQ) for adaptation or acknowledgement (ACK), acceptance (OK) or rejection of a request (NOK). |
| | Adaptation Id | | | string | 1..1 | An identifier of the adaptation message unique within the scope of the SR session. For messages indicating acceptance, acknowledgment or rejection, this identifier may correspond to the identifier created at the request. |
| | renderingSplit | | | object | 0..1 | A object identifying objects to be rendered and where they are to be rendered (SRS or SRC). The message shall be a dictionary object with keys "SRS" and "SRC", and values corresponding to a key shall be a list of named nodes from the scene description being rendered in the SR session. The keys shall indicate where the objects named in the corresponding value list are rendered. |
| | ActiveQoeMetricId | | | string | 0..1 | The unique identifier of the QoE metric to be adjusted. This parameter may be transmitted only if the activeQoeMetric has changed since the last adjustment request. This identifier was exchanged between the SRC and the SRS during the configuration step. |
| | QoeAdjustmentRequest | | | object | 0..1 | An object containing the request information for the QoE-based delay adjustment. |
| | | | DelayAdjustmentRequest | number | 0..1 | Signed delay adjustment value derived from the equation 1: adjustmentDelay = TargetDelay - measuredDelay (1) |
| | | | | | | The measuredDelay is determined during the step 12 (1036) of the call flow of FIG. 10B. This parameter is provided when the selection of the QoE levels is not handled by the SRC (the QoeLevelHandlingEntity configuration parameter is set to "SRS"), and when the AdjustmentRequestType configuration parameter is set to "DELAY_ADJUSTMENT_REQUEST". |
| | | | QoeLevelsAdjustmentRequest | string | 0..1 | The value may be either: |
| | | | | | | - "QoE_LEVEL_INCREASE": the QoE level of a flexible object is increased, or |
| | | | | | | - "QoE_LEVEL_DECREASE": the QoE level of a flexible object is decreased |
| | | | | | | This parameter is provided when the selection of the QoE levels is handled by the SRC (the QoeLevelHandlingEntity configuration parameter is set to "SRC"), and when the AdjustmentRequestType configuration parameter is set to "QoE_LEVEL_INCREASE_DECREASE". |
| | | ObjectAdjustmentRequest | | array | 0..1 | An array of the flexible objects for which QoE levels need to be set for that QoE metric. |
| | | | | | | This parameter is provided when the selection of the QoE levels is handled by the SRC (the QoeLevelHandlingEntity configuration parameter is set to "SRC"), and when the AdjustmentRequestType configuration parameter is set to "OBJECT_QoE_LEVEL_VALUE". |
| | | | FlexibleObjectId | string | 1..1 | The unique identifier of the flexible object exchanged between the SRC and the SRS during the configuration step. |
| | | | QoeLevelRequest | string | 1..1 | The unique identifier of the QoE level to be set for that flexible object. This identifier was exchanged between the SRC and the SRS during the configuration step. |
| | QoeAdjustmentAcK | | | object | 0..1 | An object containing the information for acknowledgement (ACK), acceptance (OK) or rejection of a QoE-based delay adjustment. |
| | | DelayAdjustmentAck | | string | 0..1 | Status of the delay adjustment for that QoE metric, which may be, for example: |
| | | | | | | - "DELAY_ADJUSTMENT_DONE", |
| | | | | | | - "DELAY_ADJUSTMENT_FAILED" |
| | | | | | | This parameter is provided when the selection of the QoE levels is not handled by the SRC (the QoeLevelHandlingEntity configuration parameter is set to "SRS"), and when the AdjustmentRequestType configuration parameter is set to "DELAY_ADJUSTMENT_REQUEST". |
| | | QoeLevelsAdjustmentAck | | string | 0..1 | Status of the QoE levels adjustment for that QoE metric. Could be for example: |
| | | | | | | - "QoE_LEVELS_SETTING_DONE", |
| | | | | | | - "QoE_LEVELS_SETTING_FAILED" |
| | | | | | | This parameter is provided when the selection of the QoE levels is handled by the SRC (the QoeLevelHandlingEntity configuration parameter is set to "SRC"), and when the AdjustmentRequestType configuration parameter is set to "QoE_LEVEL_INCREASE_DECREASE". |
| | | ObjectAdjustmentAck | | array | 0..1 | An array of the flexible objects for which adjustment requests have been treated by the AS for that QoE metric. |
| | | | | | | This parameter is provided when the selection of the QoE levels is handled by the SRC (the QoeLevelHandlingEntity configuration parameter is set to "SRC"), and when the AdjustmentRequestType configuration parameter is set to "OBJECT_QoE_LEVEL_VALUE". |
| | | | FlexibleObjectId | string | 1..1 | The unique identifier of the flexible object exchanged between the SRC and the SRS during the configuration step. |
| | | | QoeLevelAck | string | 1..1 | Status of the QoE level setting for that flexible object. Could be for example: |
| | | | | | | - "QoE_LEVEL_SETTING_DONE", |
| | | | | | | - "QoE_LEVEL_SETTING_FAILED" |
| | | ObjectQoeLevelsStatus | | array | 0..1 | An array providing the current set of QoE levels for the flexible objects. This information may be used by the SRC, such as when an adjustment has failed. |
| | | | FlexibleObjectId | string | 1..1 | The unique identifier of the flexible object exchanged between the SRC and the SRS during the configuration step. |
| | | | QoeLevelId | string | 1..1 | The unique identifier of the current QoE level for that flexible object. This identifier was exchanged between the SRC and the SRS during the configuration step. |

Adaptation messages indicating acceptance, acknowledgment or rejection of a split and/or QoE-based adaptation request may not include the renderingSplit, DelayAdjustmentRequest, QoeLevelsAdjustmentRequest and ObjectAdjustmentRequest Objects.

Adaptation request messages should not include the DelayAdjustmentAck, QoeLevelsAdjustmentAck, ObjectAdjustmentAck objects.

There are three types of data for the QoE-based adaptation request depending on the capability of the SRC to handle or not the selection of the appropriate set of QoE levels based on the delay adjustment requirement and based on the AdjustmentRequestType configuration parameter:
If the SRC is not handling the selection of the QoE levels (the QoeLevelHandlingEntity configuration parameter is set to "SRS"), the AdjustmentRequestType configuration parameter is set to "DELAY_ADJUSTMENT_REQUEST", and the SRC sends directly the appropriate delay adjustment value for the QoE metric delay adjustment to the SRS.
If the SRC is handling the selection of the QoE levels (the QoeLevelHandlingEntity configuration parameter is set to "SRC"), the SRC needs to determine the appropriate QoE levels of the flexible objects:
   If the AdjustmentRequestType configuration parameter is set to "QoE_LEVEL_INCREASE_DECREASE", The SRC sends either the "QoE_LEVEL_INCREASE" or "QoE_LEVEL_DECREASE" parameter to the SRS to increase or decrease the QoE level of a flexible object. It is under the responsibility of the SRS to select the appropriate flexible object.
   If the AdjustmentRequestType configuration parameter is set to "OBJECT QoE_LEVEL VALUE", the SRC sends the QoE levels to be set for each flexible object. To determine the QoE level, the SRC may use a QoE map providing already measured processing task delay of the XR scene (e.g., rendering delay) for each set of QoE levels. As an alternative, the SRC may also directly select the appropriate QoE levels for the whole scene ordered in the QoeLevels array (by decrementing/incrementing the QoE level if the delay needs to be reduced or increased respectively).

### C.2.4.2 Metadata Formats

For XR-Pose-Cap 1, the SRC shall be able to retrieve one or more pose predictions for each view and for every frame to be rendered. The pose prediction shall be formatted according to clause 8.3.2.2.

For XR-Pose-Cap 2, the SRC shall be able to retrieve and collect the user actions that occurred during an identified time interval. The action information shall be formatted according to clause 8.3.2.3.

For XR-Objld-Cap 1, the SRC shall be able to receive, retrieve and collect identifiers of objects in a scene being rendered by the SRC in a split rendering session during an identified time interval. The state information shall be formatted according to clause C.2.3.2.

For XR-ObjState-Cap 1, the SRC shall be able to receive, retrieve and collect state changes in identified objects in a scene being rendered in a split rendering session during an identified time interval. The state information shall be formatted according to clause C.2.3.3.

For XR-QoeLevels-Cap 1, when the SRC is not handling the selection of the QoE levels, the SRC shall be able to handle the delay adjustments of QoE metrics in a split rendering session during an identified time interval. The QoE metrics adjustment information shall be formatted according to clause C.2.3.2.

For XR-QoeLevels-Cap 2, when the SRC is handling the selection of the QoE levels, the SRC shall be able to receive, retrieve and collect identifiers and QoE levels of objects in a scene in a split rendering session during an identified time interval. The QoE levels information shall be formatted according to clause C.2.3.2.

### C.2.4.4 Scene Processing and Rendering Capabilities

The SRC shall have the following minimum scene processing capabilities: the *SD-Rendering-gltf-core* scene processing capabilities defined in clause 9.2 of TS *26.119.*

SD-Rendering-gltf-core enables basic compatibility of an SRC with the adaptive split rendering with the QoE-based delay adjustment profile for simple use cases, where the SRC does minimal local rendering and adaptability of rendering split is minimal. An example of such a limited scenario may be a cloud gaming use case where the application provider isolates a small subgraph of the complex game scene to be rendered by the SRC and shares the subgraph with the SRC. The subgraph may contain only the assets (mesh and textures) related to a user's character and controller to allow the SRC to render these objects locally to mask motion to photon to render latency. More advanced use cases of adaptive split rendering with the QoE-based delay adjustment place higher scene processing capabilities on the SRC.

The SRC should have the following scene processing capabilities: the *SD-Rendering-gltf-Ext1* scene processing capabilities defined in clause 9.2 of *TS 26.119.*

In addition to the above specified scene processing capabilities, depending on the device type, the SRC shall have scene capabilities defined for each device type in clause 10 of *TS 26.119.*

If QoE-based delay adjustment is used, the SRC shall support the 3GPP_scene_qoe glTF extension defined below.

### C.2.5 SRS Capabilities

The SRS capabilities to support adaptive split rendering profile are described in the sub-clauses below.

### C.2.5.3 Scene Processing and Rendering Capabilities

SRS shall have the SD-Rendering-gltf-Ext1 scene processing capabilities.

Additionally, depending on the device type of the SRC participating in a split rendering session, the SRS should support the required and recommended scene processing capabilities defined in *TS 26.119,* clause 10.3.5 for device type 2, clause 10.4.5 for device type 3, and clause 10.5.5 for device type 4.

If QoE-based delay adjustment is used, the SRS shall support the 3GPP_scene_qoe glTF extension defined in C.2.9.

### C.2.7 Extension to Client API Functions

The SRC should perform adaptive split management and/or QoE-based delay adjustment which may be based on metrics reports of an ongoing split rendering session, scene being rendered and UE operating conditions. For adaptive split rendering and/or QoE-based delay adjustment, the SRC exposes functions to load and update scene description resources. The SRC may also expose functions to an application to allow application developers to deploy custom logic for split management or QoE-based delay adjustment.

**Table 14.**

| **Method** | **Parameters In** | **Parameter Out** | **State After Success** | **Description** |
|---|---|---|---|---|
| setScene() | - srSessionId | - status | N/A | The application requests the SRC to load a scene description resource for rendering in the split rendering session. |
| | - scene description resource | | | |
| updateScene() | - srSessionld | - status | N/A | The application request the SRC to update a scene description resource being rendered in the split rendering session. |
| | - scene description resource | | | |

SRC may optionally expose the function below to the application to allow application developers to deploy custom split management and/or QoE-based delay adjustment logic.

**Table 15.**

| **Method** | **Parameters In** | **Parameters Out** | **State After Success** | **Description** |
|---|---|---|---|---|
| updateSplit() | - srSessionId | - status | N/A | The application requests or queries the SRC for a new rendering split or the current rendering split in use |
| | - rendering split | - rendering split | | |
| updateQoeAdjustment 0 | - srSessionld | - status | N/A | The application requests or queries the SRC for a new or the current QoE-based delay adjustment. |
| | - QoeAdjusmtmentRequest | - QoeAdjustmmentAcK | | |
| setActiveQoeMetric() | - srSessionld | - status | N/A | The application requests or queries the SRC for a new or the current QoE metric in use by the delay adjustment. |
| | - ActiveQoeMetricld | - ActiveQoeMetricld | | |

The parameters used are defined below:
srSessionld: as defined in Clause 9.2
scene description resource: A scene description resource compliant with capabilities specified in clause C.2.4.4. The scene description resource may be a subset of the scene description resource being rendered by the SRS. It is assumed that the application provider makes the scene description resource available to the application, for example, via M8.
status: indicates whether the call was successful (OK) or not successful (FAIL)
rendering split: A pointer to a renderingSplit object defined in C.2.3.1
QoeAdjusmtmentRequest: A pointer to a QoeAdjusmtmentRequest object defined in Table 7clause C.2.3.2
QoeAdjusmtmentAck: A pointer to a QoeAdjusmtmentAck object defined in clause C.2.3.2
ActiveQoeMetricid: The unique identifier of the QoE metric currently considered by the delay adjustment.

### C.2.9. Description of the specific glTF Extension

The content of this new section is identical to the description of the specific 3GPP_scene_qoe glTF extension provided below.

### SR IMS TS 26.567

This section describes a possible embodiment of the application on QoE-based delay adjustment in the SR_IMS specification. Call flows, configuration and runtime transmitted data of SR_IMS need to be modified to support this application, especially the sections 5 and 7 of SR_IMS.

To be consistent with SR_IMS specification, the term "SRC" may be replaced by "SR-DCMTSI client" and "SRS" by "MF" when referencing clauses of SR_MSE (TS 26.565) specification in below sections.

### 5.3 Media configuration

A terminal that intends to deploy the QoE-based delay adjustment, shall use the negotiation processes between the SR-DCMTSI client in terminal and the DC AS to determine the QoE-based delay adjustment configuration. The QoE-based delay adjustment configuration shall be in JSON format as specified below.

The exchange of the configuration information shall take place using the established MTSI data channel. The split rendering configuration message shall be formatted according to clause 8.4.2.2 of TS 26.565 and TS 26.567 and shall have the type: "urn:3gpp:split-rendering:v1 configuration". The output description message shall be formatted according to the content of C.3.4.2 and C.3.4.3 provided above and shall have the type: "urn:3gpp:split-rendering:v1 :output".

### 5.3.1 QoE-based delay adjustment configuration format

The configuration format defined in TS 26.565, clause 8.4.2.2 with the additional fields defined in Table 7 may be used for QoE-based delay adjustment configuration exchange.

These QoeBasedConfiguration objects shall be present as part of the extraConfigurations Object as defined in TS 26.565, clause 8.4.2.2 for extensibility of split rendering configuration format.

In Table 7, to be consistent with SR_IMS specification, the "SRC" shall be replaced by "SR-DCMTSI client" and "SRS" by "MF".

### 5.4.2 Metadata Formats

### 5.4.2.4 QoE-based delay adjustment Format

The QoE-based delay adjustment format that is used for IMS-based split rendering shall comply with the format defined in clause C.3.3.2 (*see Annex C.3 of TS 26.565*). The QoE-based delay adjustment shall be carried as part of the data channel messaging mechanism. The metadata data channel message format is as defined in *TS 26.565*, clause 8.3.3. The message type shall be "urn:3gpp:split-rendering:v1:qoeda".

There are three types of data for the QoE-based adaptation request depending on the capability of the SR-DCMTSI client in terminal to handle or not the selection of the appropriate set of QoE levels based on the delay adjustment requirement and based on the AdjustmentRequestType configuration parameter:
If the SR-DCMTSI client in terminal is not handling the selection of the QoE levels (the QoeLevelHandlingEntity configuration parameter is set to "MF"), the AdjustmentRequestType configuration parameter is set to "DELAY_ADJUSTMENT_REQUEST", and the SR-DCMTSI client sends directly the appropriate delay adjustment value for the QoE metric delay adjustment to the MF.
If the SR-DCMTSI client in terminal is handling the selection of the QoE levels (the QoeLevelHandlingEntity configuration parameter is set to "SR-DCMTSI client"), the SR-DCMTSI client needs to determine the appropriate QoE levels of the flexible objects:
   If the AdjustmentRequestType configuration parameter is set to "QoE_LEVEL_INCREASE_DECREASE", The SR-DCMTSI client sends either the "QoE_LEVEL_INCREASE" or "QoE_LEVEL_DECREASE" parameter to the MF to increase or decrease the QoE level of a flexible object. It is under the responsibility of the MF to select the appropriate flexible object.
   If the AdjustmentRequestType configuration parameter is set to "OBJECT_QoE_LEVEL_VALUE", the SR-DCMTSI client sends the QoE levels to be set for each flexible object. To determine the QoE level, the SR-DCMTSI client may use a QoE map providing already measured processing task delay of the XR scene (e.g., rendering delay) for each set of QoE levels. As an alternative, the SR-DCMTSI client may also directly select the appropriate QoE levels for the whole scene ordered in the QoeLevels array (by decrementing/incrementing the QoE level if the delay needs to be reduced or increased respectively).

### 5.5 Scene Descriptions

An SR-DCMTSI client in terminal that is a compliant device type of *TS 26.119* shall support the capabilities requirements for scene description as described in clause 10 of *TS 26.119* for its respective device type.

When QoE-based delay adjustment is used, the SR-DCMTSI client in terminal and the MF shall support the 3GPP_scene_qoe glTF extension defined in clause *C.3.8* (*see Annex C.3 of TS 26.565).*

### Network Support Procedures

An SR-DCMTSI client or an MF may trigger further procedures during a split rendering. One such procedure may be to adapt the split of rendering operations or the QoE Levels for QoE-based delay adjustment between the SR-DCMTSI client and the MF during a split rendering session. This adaptation may be due to change in operating conditions of the split rendering session, for example operating conditions of the UE, the MF or changes in the application or scene being rendered, for example changes in the scene description. The priority between both adaptation mechanisms, split or QoE-based, may be indicated in the configuration during session setup or determined following SR-DCMTSI client Capabilities and the reactiveness/responsiveness of the adaptation. Adaptation may include data exchange, for example, exchange of adaptation messages, application state information and assets needed for the split rendering of an DC application. The following generic procedure shall apply, while the exact details may depend on the DC-application being rendered.

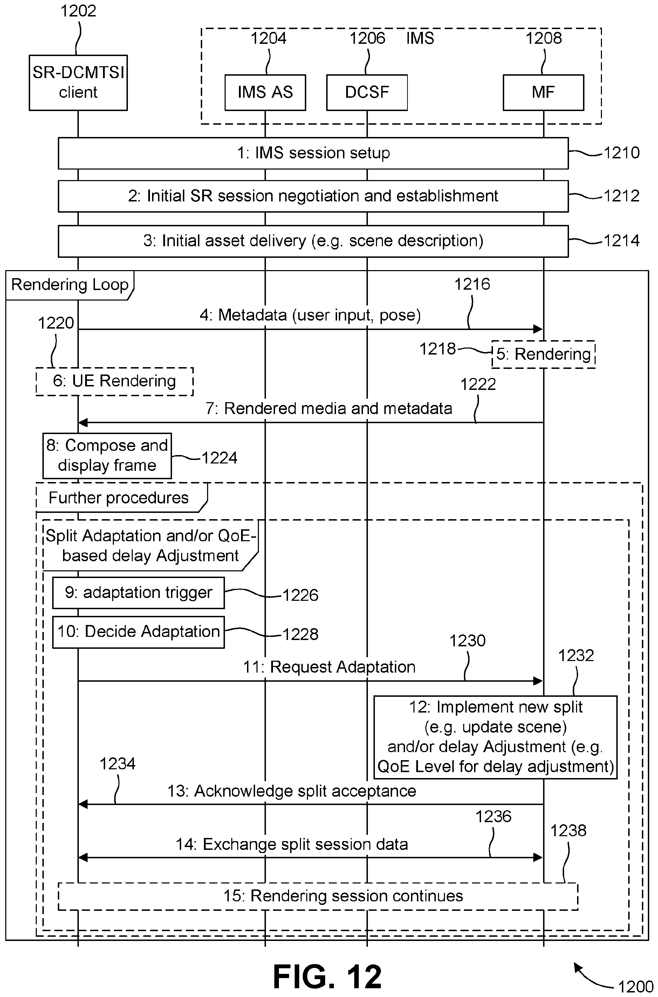

FIG. 12 is a message sequencing diagram illustrating an example process for adaptation of split rendering and/or quality of experience-based delay adjustment according to some embodiments. FIG. 12 shows an example process 1200. For some embodiments, the IMS AS 1204 and/or the DCSF 1206 are not impacted by messages between the SR-DCMTSI client 1202 and the MF 1208.

In step 1 (1210), the IMS session is established between the SR-DCMTSI client 1202 in terminal and a terminating SR-DCMTSI Client 1202 which may be in a terminal. For Person to Person calls, procedures in clause 7.1 are followed.

In step 2 (1212), a split rendering session is set up between the SR-DCMTSI client 1202 and a serving MF 1208.

In step 3 (1214), assets related to the application being split rendered may be delivered to participants of the split rendering session. The asset delivery may include JavaScript assets, scene descriptions, and graphical objects used for the session.

The rendering loop is executed continuously during the duration of the split rendering session, for each frame.

In step 4 (1216), the SR-DCMTSI client 1202 in the terminal sends metadata required for rendering to the MF 1208. The metadata may include pose, pose predictions, user inputs, among other items.

In step 5 (1218) and step 6 (1220), the SR-DCMTSI client 1202 in the terminal and the MF 1208 render the frame.

In step 7 (1222), the frame rendered by the MF 1208 is transmitted to the SR-DCMTSI client 1202 in the terminal as well as possible metadata.

In step 8 (1224), the SR-DCMTSI client 1202 in the terminal composes a display frame from the received rendered media and media rendered locally.

Steps 5, 6, and 7, (1218, 1220, 1222) although ordered above, may occur in any order. Step 8 (1224) may include pose-correction. Step 8 and 6 may be executed as a single step.

Split Adaptation refers to adaptation of split rendering operations in an ongoing split rendering session between the SR-DCMTSI client 1202 and MF 1208, without impacting the MF 1208 resources provisioned by IMS AS in step 9 of clause 7.1. A QoE-based delay Adjustment refers to the modification of some parameters of processing steps in the rendering loop in the SR-DCMTI client 1202 and/or in the MF 1208 to adjust the delay to reach an acceptable QoE.

In step 9 (1226), the SR-DCMTSI client 1202 measures and collects the active QoE metric currently considered by the delay adjustment (e.g., poseToRenderToPhoton, roundtriplnteractionDelay) during the rendering loop. A trigger to adapt the split or the QoE Levels occurs at the SR-DCMTSI client 1202 in the terminal; the trigger may be, for example, a change in available UE resources (e.g., battery and\or computer), changes in QoE of the SR session (e.g., the measured delay of the QoE metric poseToRenderToPhoton is out of the acceptable delay range due to new network conditions), and/or changes in the scene/application being rendered.

In step 10 (1228), the SR-DCMTSI client 1202 in the terminal decides if a new split of the rendering operations and/or if a QoE-based delay adjustment is needed. The SR-DCMTSI client in terminal determines the new split and/or the QoE-based delay adjustment.

In step 11 (1230), the SR-DCMTSI client 1202 in the terminal sends a request to the MF to adapt the QoE-based delay and/or the split to the new split.

In step 12 (1232), the MF 1208 actuates the new split of the rendering operations and/or changes QoE levels according to the QoE-based delay adjustment request.

In step 13 (1234), the MF 1208 sends an acknowledgment of the new split and/or the QoE-based delay adjustment to the SR-DCMTSI client in terminal.

In step 14 (1236), the MF 1208 and UE may exchange messages and data to support the new split of operations. This may include exchange of messages, for example, for synchronization of the state of the scene being split rendered or exchange of assets, for example, those in Step 3.

In step 15 (1238), the rendering loop (steps 4 through 8) (1216, 1218, 1220, 1222, 1224) continue.

Split adaptation is shown to be initiated by the SR-DCMTSI client 1202 in the terminal for clarity. The procedure may be triggered by the MF 1208 for some embodiments. Further, other procedures to actuate the split may be executed during the split rendering session.

For some embodiments, the configuration data of the adjustment mechanism may be provided in an XR scene description format such as gITF.

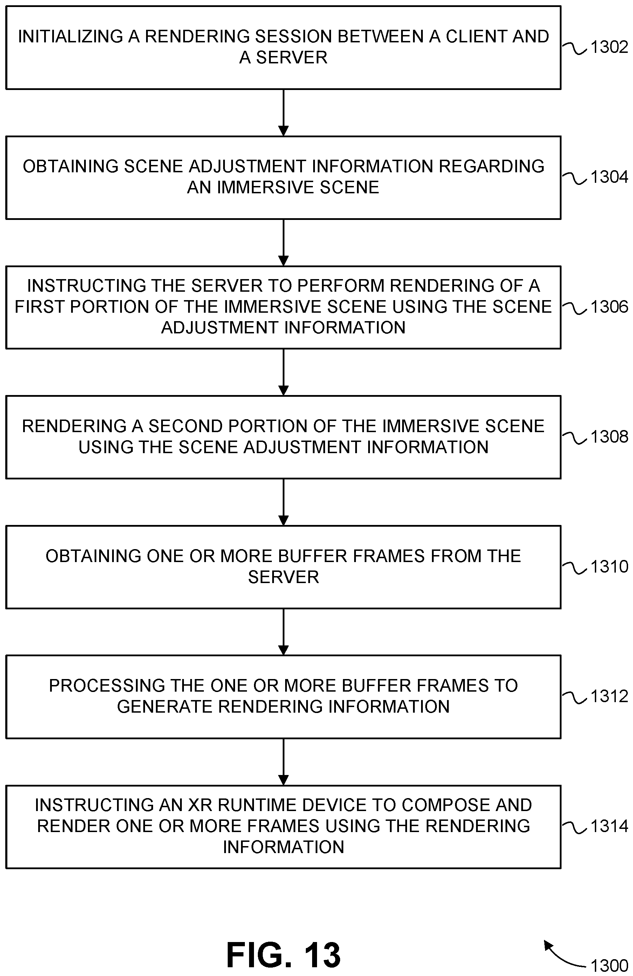

FIG. 13 is a flowchart illustrating an example process for rendering an immersive scene according to some embodiments. For some embodiments, an example process 1300 may include initializing 1302 a rendering session between a client and a server. For some embodiments, the example process 1300 may further include obtaining 1304 scene adjustment information regarding an immersive scene. For some embodiments, the example process 1300 may further include instructing 1306 the server to perform rendering of a first portion of the immersive scene using the scene adjustment information. For some embodiments, the example process 1300 may further include rendering 1308 a second portion of the immersive scene using the scene adjustment information. For some embodiments, the example process 1300 may further include obtaining 1310 one or more buffer frames from the server. For some embodiments, the example process 1300 may further include processing 1312 the one or more buffer frames to generate rendering information. For some embodiments, the example process 1300 may further include instructing 1314 an XR runtime device to compose and render one or more frames using the rendering information.

A first example method in accordance with some embodiments may include: initializing a rendering session between a client and a server; obtaining pose information for an object in an immersive scene; instructing the server to perform rendering of the object using the pose information; obtaining one or more buffer frames from the server, wherein the one or more buffer frames comprise the rendered object; processing the one or more buffer frames to generate one or more raw buffer frames; instructing an XR runtime device to compose and render one or more frames using the one or more raw buffer frames; obtaining quality of experience (QoE) metrics; determining a QoE-based delay adjustment; instructing the server to perform the QoE-based delay adjustment; and continuing the rendering session using the QoE-based delay adjustment.

A second example method in accordance with some embodiments may include: initializing a rendering session between a client and a server; obtaining scene adjustment information regarding an immersive scene; instructing the server to perform rendering of a first portion of the immersive scene using the scene adjustment information; rendering a second portion of the immersive scene using the scene adjustment information; obtaining one or more buffer frames from the server, wherein the one or more buffer frames comprise the first portion of the immersive scene; processing the one or more buffer frames to generate rendering information; and instructing an XR runtime device to compose and render one or more frames using the rendering information.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: initializing a rendering session between a client and a server; obtaining scene adjustment information regarding an immersive scene; instructing the server to perform rendering of a first portion of the immersive scene using the scene adjustment information; rendering a second portion of the immersive scene using the scene adjustment information; obtaining one or more buffer frames from the server; processing the one or more buffer frames to generate rendering information; and instructing an XR runtime device to compose and render one or more frames using the rendering information.

For some embodiments of the example method, the scene adjustment comprises pose information for an object in an immersive scene.

For some embodiments of the example method, instructing the server to perform rendering of the first portion of the immersive scene using the scene adjustment information comprises instructing the server to perform rendering of the object using the pose information.

For some embodiments of the example method, the one or more buffer frames comprise the first portion of the immersive scene.

For some embodiments of the example method, the one or more buffer frames comprise the rendered object.

For some embodiments of the example method, the rendering information comprises one or more raw buffer frames.

Some embodiments of the example method may further include: obtaining one or more quality of experience (QoE) metrics; determining a QoE-based delay adjustment based on the one or more QoE metrics; instructing the server to perform the QoE-based delay adjustment; and continuing the rendering session using the QoE-based delay adjustment.

Some embodiments of the example method may further include: configuring a delay adjustment mechanism, wherein the delay adjustment mechanism comprises at least one of different QoE levels defined for each object, dependency information between QoE level of objects, and an adjustment strategy; measuring at least one delay; and determining a set of QoE levels based on a QoE map and the configured delay adjustment mechanism.

For some embodiments of the example method, measuring the at least one delay comprises: measuring at least one roundtrip delay, wherein measuring the at least one roundtrip delay comprises determining the at least one roundtrip delay based on several samples; and measuring at least one task processing delay.

Some embodiments of the example method may further include: receiving an adaptation trigger; determining an adaptation adjustment; requesting the server to perform the adaptation adjustment; and continuing the rendering session using the adaptation adjustment.

For some embodiments of the example method, the adaptation adjustment comprises at least one of a scene split, a scene update, a delay adjustment, and a QoE level adjustment.

For some embodiments of the example method, scene adjustment information comprises at least one of pose information of an object in the scene, one or more user actions, one or more state changes, and a QoE-based delay adjustment request.

For some embodiments of the example method, processing the one or more buffer frames comprises: decoding the one or more buffer frames; generating one or more raw buffer frames from the decoded one or more buffer frames; and preparing one or more composition layers and their corresponding swapchain images using the one or more raw buffer frames, wherein instructing the XR runtime device comprises sending the one or more composition layers and their corresponding swapchain images to the XR runtime device.

Some embodiments of the example method may further include determining to split rendering of the immersive scene into rendering of the first portion of the immersive scene and rendering of the second portion of the immersive scene.

An example apparatus in accordance with some embodiments may include: a processor; and a memory storing instructions operative, when executed by the processor, to cause the apparatus to perform any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
initializing a rendering session between a client and a server;
obtaining scene adjustment information regarding an immersive scene;
instructing the server to perform rendering of a first portion of the immersive scene using the scene adjustment information;
rendering a second portion of the immersive scene using the scene adjustment information;
obtaining one or more buffer frames from the server;
processing the one or more buffer frames to generate rendering information; and
instructing an XR runtime device to compose and render one or more frames using the rendering information.

2. The method of claim 1, wherein the scene adjustment comprises pose information for an object in an immersive scene.

3. The method of claim 2, wherein instructing the server to perform rendering of the first portion of the immersive scene using the scene adjustment information comprises instructing the server to perform rendering of the object using the pose information.

4. The method of any one of claims 1-3, wherein the one or more buffer frames comprise the first portion of the immersive scene.

5. The method of any one of claims 1-3, wherein the one or more buffer frames comprise the rendered object.

6. The method of any one of claims 1-5, wherein the rendering information comprises one or more raw buffer frames.

7. The method of any one of claims 1-6, further comprising:
obtaining one or more quality of experience (QoE) metrics;
determining a QoE-based delay adjustment based on the one or more QoE metrics;
instructing the server to perform the QoE-based delay adjustment; and
continuing the rendering session using the QoE-based delay adjustment.

8. The method of any one of claims 1-6, further comprising:
configuring a delay adjustment mechanism,
wherein the delay adjustment mechanism comprises at least one of different QoE levels defined for each object, dependency information between QoE level of objects, and an adjustment strategy; measuring at least one delay; and
determining a set of QoE levels based on a QoE map and the configured delay adjustment mechanism.

9. The method of claim 8, wherein measuring the at least one delay comprises:
measuring at least one roundtrip delay,
wherein measuring the at least one roundtrip delay comprises determining the at least one roundtrip delay based on several samples; and
measuring at least one task processing delay.

10. The method of any one of claims 1-9, further comprising:
receiving an adaptation trigger;
determining an adaptation adjustment;
requesting the server to perform the adaptation adjustment; and
continuing the rendering session using the adaptation adjustment.

11. The method of claim 10, wherein the adaptation adjustment comprises at least one of a scene split, a scene update, a delay adjustment, and a QoE level adjustment.

12. The method of any one of claims 1-11, wherein scene adjustment information comprises at least one of pose information of an object in the scene, one or more user actions, one or more state changes, and a QoE-based delay adjustment request.

13. The method of any one of claims 1-12, wherein processing the one or more buffer frames comprises:
decoding the one or more buffer frames;
generating one or more raw buffer frames from the decoded one or more buffer frames; and
preparing one or more composition layers and their corresponding swapchain images using the one or more raw buffer frames,
wherein instructing the XR runtime device comprises sending the one or more composition layers and their corresponding swapchain images to the XR runtime device.

14. The method of any one of claims 1-13, further comprising determining to split rendering of the immersive scene into rendering of the first portion of the immersive scene and rendering of the second portion of the immersive scene.

15. An apparatus comprising:
a processor; and
a memory storing instructions operative, when executed by the processor, to cause the apparatus to perform the method of any one of claims 1 through 14.
